(19) Europäisches Patentamt
European Patent Office
Office européen des brevets

(11) **EP 0 892 368 B1**

(12) **EUROPÄISCHE PATENTSCHRIFT**

(45) Veröffentlichungstag und Bekanntmachung des Hinweises auf die Patenterteilung:
**12.07.2006   Patentblatt 2006/28**

(51) Int Cl.:
***G07B 17/00*** *(2006.01)*

(21) Anmeldenummer: **98250246.0**

(22) Anmeldetag: **07.07.1998**

(54) **Verfahren zur Statistikmodusnachladung und zur statistischen Erfassung nach Statistikklassen bei der Speicherung eines Datensatzes**

Method for downloading statistical data and for the classification in statistical sets at the loading of a batch of data

Procédé pour le téléchargement de données statistiques et de recensement en ensembles statistiques lors du chargement des données

(84) Benannte Vertragsstaaten:
**CH DE FR GB IT LI NL**

(30) Priorität: **14.07.1997   DE 19731304**

(43) Veröffentlichungstag der Anmeldung:
**20.01.1999   Patentblatt 1999/03**

(73) Patentinhaber: **Francotyp-Postalia GmbH**
**16547 Birkenwerder (DE)**

(72) Erfinder:
• **Reisinger, Frank**
**16515 Oranienburg (DE)**
• **Turner, Olaf**
**12349 Berlin (DE)**

(56) Entgegenhaltungen:
**EP-A- 0 516 403          EP-A- 0 717 376**
**US-A- 4 442 501          US-A- 4 812 965**
**US-A- 4 931 943          US-A- 5 309 363**

EP 0 892 368 B1

## Beschreibung

Die Erfindung betrifft ein Verfahren zur Statistikmodusnachladung und zur statistischen Erfassung nach Statistikklassen bei der Speicherung eines Datensatzes in einer elektronischen Frankiermaschine in Zusammenhang mit einer Dienstleistung, in der im Oberbegriff des Anspruchs 1 angegebenen Art. Unter Statistikmodusnachladung wird eine Datenübermittlung von Statistikanweisungsdaten verstanden, welche beliebig flexibel, frei wählbar und zusammenstellbar sind. Dieses Verfahren vergrößert die Möglichkeiten einer Abrechnung nach Dienstleistungen, bei gleichzeitiger Sicherheit der Abrechnungsdaten in elektronischen Frankiermaschinen vor einer Manipulation, durch ein Führen einer entsprechenden Statistik, vorzugsweise nach Postklassen. Sicherheitsmaßnahmen verhindern ein nicht abgerechnetes gültiges Frankieren oder eine andere nichtabgerechnete Manipulation in Zusammenhang mit Dienstleistungen.

Bekannte Frankiermaschinen sind mindestens mit einem Eingabemittel, einem Ausgabemittel, einem Ein/Ausgabe-Steuermodul, einer Programm-, Daten- und insbesondere die Abrechnungsregister tragenden Speichereinrichtung, einer Steuereinrichtung und einem Druckermodul ausgerüstet. Die Erfindung betrifft insbesondere Frankiermaschinen, die einen vollelektronischen erzeugten Abdruck zum Frankieren von Postgut oder zu vergleichbaren Zwekken liefern.

Bei einer aus der US 4 746 234 bekannten Frankiermaschine werden feste und variable Informationen in Speichermitteln (ROM, RAM) gespeichert, um diese dann, wenn ein Brief auf dem Transportpfad vor der Druckposition einen Mikroschalter betätigt, mittels eines Mikroprozessors auszulesen und um ein Drucksteuersignal zu bilden. Beide vorgenannte Informationen werden elektronisch zu einem Druckbild zusammengesetzt und können beispielsweise durch Thermotransferdruckmittel auf einen zu frankierenden Briefumschlag ausgedruckt werden. Eine Frankiermaschine erzeugt in der Regel einen Aufdruck in einer mit der Post vereinbarten Form rechtsbündig, parallel zur oberen Kante des Postgutes beginnend mit dem Inhalt Postwert im Poststempel, Datum im Tagesstempel und Stempelabdrucke für Werbeklischee und ggf. Versendungsart im Wahldruckstempel. Der Postwert, das Datum und die Versendungsart bilden hierbei die entsprechend dem Poststück einzugebenden variablen Informationen. Grundsätzlich ist jede vorgenommene Frankierung abzurechnen und jede Manipulation, welche zu einer nichtabgerechneten Frankierung führt, muß verhindert werden.

Es existieren bereits die unterschiedlichsten Abrechnungs- und Bezahlungsmöglichkeiten. Beim Postwert handelt es sich meist um die vom Absender vorausbezahlte Beförderungsgebühr (Franko), die einen wiederauffüllbaren Guthabenregister entnommen und zum Freimachen der Postsendung verwendet wird. Im Gegensatz dazu wird beim Kontokorrentverfahren ein Register in Abhängigkeit von den mit dem Postwert vorgenommenen Frankierungen lediglich hochgezählt und in regel-mäßigen Abständen, von einem Postinspektor abgelesen. Die Bezahlung erfolgt somit erst später, beispielsweise per Lastschriftverfahren.

Bekannte Frankiermaschinen enthalten in mindestens einem Speicher drei relevante Postregister für verbrauchten Summenwert (aufsteigendes Register), noch verfügbares Restguthaben (absteigendes Register) und Register für eine Kontrollsumme. Die Kontrollsumme wird mit der Summe aus verbrauchten Summenwert und aus verfügbaren Restguthaben verglichen. Bereits damit ist eine Überprüfung auf richtige Abrechnung möglich. Bei der bekannten Abrechnung mit einem vorausbezahlten Guthaben umfaßt die Speichereinrichtung mindestens einen nichtflüchtigen Speicherbaustein, der das aktuell verbliebene Restguthaben enthält, welches daraus resultiert, daß von einem früher in die Frankiermaschine geladenen Guthaben der jeweilige zu druckenden Portowert abgezogen wird. Die Frankiermaschine blockiert, wenn das Restguthaben Null ist. Durch eine Guthabennachladung kann dieser Restbetrag wieder um den Nachladebetrag aufgestockt werden.

Die gesicherte Nachladung einer Frankiermaschine mit einem Guthaben wurde in US 3 255 439 einerseits bereits mit einer automatischen Signalübertragung von der Frankiermaschine zur Datenzentrale verbunden, wenn immer eine vorbestimmte Geldmittelsumme, welche frankiert wurde, oder Stückzahl an bearbeiteten Poststücken oder eine vorbestimmte Zeitperiode erreicht wurde. Alternativ kann ein der Geldmittelsumme, Stückzahl oder Zeitperiode entsprechendes Signal übermittelt werden. Dabei erfolgt die Kommunikation mittels binärer Signale über miteinander über eine Telefonleitung verbundene Konverter. Die Maschine erhält eine ebenso gesicherte Nachladung entsprechend der Kreditbalance und blockiert in dem Fall, wenn kein Kredit nachgeliefert wird.

Aus der US 4 864 506 ist bekannt, vor einer Guthabennachladung in die Frankiermaschine, zur Autorisierung durch die Datenzentrale die Identitätsnummer der Frankiermaschine und die Werte im ab- und aufsteigenden Register abzufragen. Weiterhin ist aus obengenanntem Patent bekannt, daß die Kommunikation der Datenzentrale mit der Frankiermaschine nicht auf bloße Guthabenübertragung in die Frankiermaschine beschränkt bleiben braucht. Vielmehr wird im Falle einer Abmeldung der Frankiermaschine beim Postbeförderer die Kommunikation der Datenzentrale mit der Frankiermaschine zur Übertragung des Restguthabens der Frankiermaschine in die Datenzentrale genutzt. Der Wert im absteigenden Postregister der Frankiermaschine ist dann Null, was die Frankiermaschine wirksam außer Betrieb setzt. Es versteht sich von selbst, daß hierfür geeignete Sicherheitsmaßnahmen getroffen werden müssen, damit das in der Frankiermaschine gespeicherte Guthaben nicht in unbefugter Art und Weise aufgestockt und dann auf ein Bankkonto rückübertragen werden kann.

Unter dem Titel: Verfahren zur Verbesserung der Sicherheit von Frankiermaschinen; sind in der DE 44 46 667 spezielle Sicherheitsmaßnahmen vorgeschlagen worden. Die Sicherheitsmaßnahmen betreffen einerseits eine gesicherte Datenübertragung bei allen Transaktionen und andererseits die Überwachung auf vollständige Durchführung einer zweiten Transaktion. Nach Verbindungsaufnahme durch die Frankiermaschine mit einer entfernten Datenzentrale, welche die übermittelte PIN überprüft und den Empfang bestätigt, erfolgt eine Absendung einer ersten verschlüsselten Mitteilung seitens der Frankiermaschine an die Datenzentrale. In der verschlüsselten Mitteilung sind der Wertvorgabewunsch, Identifizierungs-, Postregisterdaten und CRC-Daten (Cyclic Redundancey Check) mittels DES-Algorithmus (Data Encryption Standard) verschlüsselt, wobei ein erster Schlüssel Anwendung findet. Anschließend soll von der Frankiermaschine eine zweite verschlüsselte Mitteilung empfangen und entschlüsselt werden. Zur Entschlüsselung findet wieder der erste Schlüssel Anwendung. Die zweite verschlüsselte Mitteilung enthält einen zweiten Schlüssel, Identifizierungs- und Transaktionsdaten. Die Verifizierung erfolgt anhand der übermittelten Identifizierungsdaten. Der zur Entschlüsselung von nachfolgenden Transaktionsdaten benötigte zweite Schlüssel und die Transaktionsdaten (Wertvorgabe-Wunsch) werden gespeichert. Nach dieser ersten Transaktion mit Mitteilung des o.g. Wunsches erfolgt die Durchführung einer zweiten Transaktion, die vergleichbar abläuft. Es wird aber der Wertvorgabe-Wunsch als Vorgabewert gespeichert und die Durchführung auf Vollständigkeit überwacht.

Gemäß der GB 22 33 937 A und US 5 181 245 kommuniziert die Frankiermaschine periodisch mit der Datenzentrale. Ein Blockiermittel gestattet, die Frankiermaschine nach Ablauf einer vorbestimmten Zeit bzw. nach einer vorbestimmten Anzahl an Operationszyklen zu blockieren und liefert eine Warnung an den Benutzer. Zum Freischalten muß von außen ein verschlüsselter Code eingegeben werden, welcher mit einem intern erzeugten verschlüsselten Code verglichen wird. Um zu verhindern, daß falsche Abrechnungsdaten an die Datenzentrale geliefert werden, werden in die Verschlüsselung des vorgenannten Codes die Abrechnungsdaten mit einbezogen. Nachteilig ist, daß die Warnung zugleich mit dem Blockieren der Frankiermaschine erfolgt, ohne daß der Benutzer eine Möglichkeit hat, sein Verhalten rechtzeitig entsprechend zu ändern. Aus der US 5 243 654 ist eine Frankiermaschine bekannt, wo die laufenden von Uhr/Datumsbaustein gelieferten Zeitdaten mit gespeicherten Stillegungszeitdaten verglichen werden, um bei Gleichheit die Frankiermaschine zu deaktivieren. Deren Betrieb ist in diesem Fall unterbrochen und der Benutzer muß neue Eingaben umständlich manuell tätigen. Auch durch diese Lösung wird ein Drucken verhindert und damit erreicht, daß sich der Benutzer mit seiner Frankiermaschine bei der Datenzentrale periodisch meldet, um Abrechnungsdaten (Verbrauchssummenbetrag aus dem aufsteigenden Register) zu übermitteln. Wegen der manuellen Benutzereingaben könnte, insbesondere bei einem ungeübten Benutzer, die Frankiermaschine unnötig lange blockiert werden.

Die Anmelderin hat eine Reihe an automatisch wirkenden Sicherheitsmaßnahmen entwickelt, welche vom Benutzer unbemerkt und ohne sein Zutun durchgeführt werden. Gemäß der EP 660 269 wird die Absicherung von Registerwerten, die in einem nichtflüchtigen NVRAM gespeichert sind, mit einem MAC (MESSAGE AUTHENTIFICATION CODE) ausgeführt. Diese Lösung schützt vor einer Manipulation mit einem Mikroprozessor in einer Steuereinheit der Frankiermaschine. Dieser ist zur Ausführung von Schritten für eine Start- und Initialisierungsroutine und nachfolgender Systemroutine mit einer Möglichkeit in einen Kommunikationsmodus mit einer entfernten Datenzentrale einzutreten programmiert. Nach weiteren Schritten, um in einen Frankiermodus einzutreten, wird von dem Frankiermodus nach Ausführung einer Abrechnungs- und Druckroutine in die Systemroutine zurückverzweigt. Überprüfungen werden mittels einem ausgewählten Prüfsummenverfahren innerhalb eines OTP-Prozessors (ONE TIME PROGRAMMABLE) durchgeführt, der intern die entsprechenden Programmteile und außerdem den Code zur Bildung des MAC gespeichert enthält. Deshalb kann ein potentieller Manipulator die Art des Prüfsummenverfahrens nicht nachvollziehen. Auch weitere sicherheitsrelevante Schlüsseldaten und Abläufe sind ausschließlich im Inneren des OTP-Prozessors gespeichert, um eine MAC-Absicherung über die Postregister zu legen.

In EP 660 269 wird noch von einer Frankiermaschine ausgegangen, die eine verschließbare und versiegelte Klappe hat, die den Zugriff auf die dahinter liegende Hardware (EPROM-Sockel) nur einem begrenztem speziell vertrauenswürdigen Personenkreis erlaubt. Hier konnte davon ausgegangen werden, daß durch diese Personen keine Manipulation der Frankiermaschine erfolgt. Der Anwender hat keinen Zugriff auf den Klischee-EPROM-Sockel und kann diesen Klischee-EPROM selbständig nicht wechseln. Damit können andere Werbeklischeedaten oder Portotariftabellendaten nur durch einen Servicetechniker installiert werden, welcher berechtigt ist, die Postklappe zu öffnen (Öffnungsbefugnis). Die Sicherheit kann nicht für eine Frankiermaschine aufrecht erhalten werden, die eine teilweise geöffnete Postklappe aufweist. Dieser Nachteil wird in einer weiteren deutschen Patentanmeldung DE 19534530 A1, mit dem Titel: Verfahren zur Absicherung von Daten und Programmcode einer elektronischen Frankiermaschine, behoben. Letztere ist zur Kommunikation mit einer entfernten Datenzentrale fähig und weist einen OTP-Prozessor in einer Steuereinrichtung der Frankiermaschine auf. Mit den Programmteilen, die im internen OTP-ROM ausgeführt sind, wird auch ein Schutz auch von extern gespeicherten Programmteilen ermöglicht, die beispielsweise in einem EPROM gespeichert vorliegen. Der Anwender hat nun einen Zugriff auf den Klischee-EPROM-Sockel und kann einen Klischee-EPROM selbständig wechseln. Damit können andere Werbeklischeedaten oder Portotariftabellendaten auch durch den Benutzer selbst installiert werden, welcher berechtigt ist, die Klappe über dem EPROM-Sockel zu öffnen. Einerseits wird also eine Dienstleistung vom Benutzer selbst erbracht, was aber andererseits eine maschineninterne Überprüfung auf Mißbrauch der Möglichkeiten erforderlich macht, welche dem Benutzer gestattet werden. Eine im Rahmen der Start- und Initialisierungsroutine stattfindende Startsicherheitsüberprüfung läuft vor einer sicheren Druckdatenaufrufroutine und vor der nachfolgenden Systemroutine ab. Sie dient zur Feststellung der Gültigkeit eines Programm-Codes und/oder von Daten im vorbestimmten Speicherplatz anhand eines zugehörigen MAC (MESSAGE AUTHENTIFICATION CODE), welcher im selben Speichermittel gespeichert vorliegt. Die Überprüfung auf gültigen Programm-Code und/oder auf gültige Daten erfolgt mittels eines ausgewählten Prüfsummenverfahrens innerhalb eines OTP-Prozessors (ONE TIME PROGRAMMABLE), der intern die entsprechenden Programmteile enthält. Eine Überführung der Frankiermaschine in die vorgenannte Systemroutine erfolgt bei Gültigkeit der Daten. Eine Überprüfung der Daten in der Frankiermaschine erfolgt ebenfalls in der vorgenannten Systemroutine. Wenn Daten ungültig sind bzw. ein spezifisches Manipulationskriterium erfüllt ist, wird die Frankiermaschine in einen ersten Modus überführt, der Schritte zum Verhindern des Frankierens bzw. Sperrens der Frankiermaschinen und/oder Schritte zum Verhindern einer weiteren Programmausführung bzw. einer vom OTP-Prozessor nach extern führenden Programmverzweigung im Rahmen vorgenannter Systemroutine beinhaltet.

Es sind auch Authentizitätsprüfungen im Ergebnis der Druckdateneingabe in der Druckdatenaufrufroutine für Rahmen- und/oder Fensterdaten sowohl während der Start- und Initialisierungsroutine als auch während vorgenannter Systemroutine im Schritt für Tastaturabfrage und Anzeige von sicherheitsrelevanten Fensterdaten, welche bei der Druckdateneingabe geändert wurden, vorgesehen. Bei fehlender Authentizität werden Schritte zum Verhindern einer weiteren Programmausführung bzw. einer vom OTP-Prozessor nach extern führenden Programmverzweigung ausgelöst. Diese Überprüfung hat den Vorteil, daß Programmcode und konstante sicherheitsrelevante Daten nicht verändert, nicht übersprungen und nicht ausgespäht werden können. Damit ist die Programmausführung von Programmteilen, die im internen OTP-ROM ausgeführt werden, nicht manipulierbar. Solange keine Programmverzweigung stattfindet, besteht ein sicherer Schutz vor betrügerischer Manipulation. Eine fehlerhafte oder manipulierte Frankiermaschine verbleibt mit ihrer Programmausführung vollständig im OTP-ROM und kann nicht in andere Betriebsmodi gezwungen werden.

Das Verfahren zur Absicherung von Daten und Programmcode einer elektronischen Frankiermaschine umfaßt außerdem das Übertragen eines extern gespeicherten vorbestimmten MAC-Wert in den internen OTP-RAM und ein Bilden einer Checksumme im OTP-Prozessor über den Inhalt desjenigen externen Speichers, welchem der MAC zugeordnet ist, und einen Vergleich des Ergebnisses mit dem im internen OTP-RAM flüchtig gespeicherten vorbestimmten Wert des MAC vor und/oder nach Ablauf des Frankiermodus bzw. Betriebsmodus, und somit auch nach der Initialisierung (das heißt wenn die Frankiermaschine betrieben wird), oder in Zeiten, in welchen nicht gedruckt wird (das heißt wenn die Frankiermaschine im Standby-Modus betrieben wird). Im Fehlerfall erfolgt dann eine Protokollierung und anschließende Blockierung der Frankiermaschine. Im OTP-ROM sind auch eine Vielzahl von Schlüsseln und ein Verschlüsselungsalgorithmus gespeichert, welche bei der Programmausführung von sicherheitsrelevanten Transaktionen und bei der externen Speicherung von sicherheitsrelevanten Daten Anwen-dung finde. Die oben genannte Lösung geht weiterhin davon aus, daß die in der Frankiermaschine gespeicherten Geldmittel vor unautorisiertem Zugriff geschützt werden müssen. Die Verfälschung von in der Frankiermaschine gespeicherten Daten wird so weit erschwert, daß sich der Aufwand für einen Manipulator nicht mehr lohnt. Der Nachteil bei dieser Lösung besteht im wesentlichen also nur noch darin, daß dem Benutzer zugemutet wird, eine Dienstleistung zu erbringen. So ist beispielsweise eine entsprechend aktuelle Portogebührentabelle zu laden, wenn sich die Beförderer-Tarife geändert haben. Dem Benutzer sollten möglichst aber nicht noch weitere Arbeiten oder Dienstleistungen aufgebürdet werden, wenn dies nicht unbedingt erforderlich ist.

Nun wird von einigen Postbehörden/Postbeförderern verlangt oder durch Preisnachlässe begünstigt, daß der Benutzer Ausdrucke über in der Frankiermaschine gespeicherte Betriebsablaufe, für Poststapel/Fracht begleitende Dokumente/Frachbrief oder in einer Zeitperiode getätigt Abrechnungen bzw. Statistiken oder Quittungen über ein erfolgtes Nachladen zur Guthabenaufstockung anfertigt. Gemäß der EP 285 956 B1 ist eine Frankiermaschine mit einem speziellen Betriebsablaufspeicher und mit einem Anschluß für einen externen Drucker ausgestattet. Aus der gespeicherten periodischen Erfassung aller Daten aber nun bestimmte herauszusuchen und zu drucken, verlangt aber aber vom Benutzer einen hohen Zeitaufwand für solche Zwecke bereitzustellen.

Auch aus dem EP 493 948 B1 ist eine Frankiermaschine bekannt, die mit einer Mehrzahl an Registern in einem gesicherten Modul zum Speichern von Buchhaltungsdaten ausgestattet ist, die sich auf den Gebrauch der Frankiermaschine zum Frankieren von Gegenständen beziehen. Ein erster Satz an Registern bezieht sich auf einen speziellen ersten Dienst und ein zweiter Satz an Registern bezieht sich auf einen speziellen zweiten Dienst, wobei über die Eingabemittel die speziellen Dienste auswählbar sind und die Buchhaltungsdaten des jeweils ausgewählten Dienstes aktualisiert werden. Eine separat abzurechnende Versendungsart ist beispielsweise "first class", die bei der Beförderung bevorzugt wird. Eine andere separat abzurechnende Versendungsart ist beispielsweise "second class". Die Versendungsart kann als separater Wahldruckstempel zum Frankierstempel oder integriert mit abgedruckt werden. Es werden aber nur bestimmte Dienstleistungen erfaßt. Vom Frankiermaschinenhersteller ist aber schwierig für zukünftige Postbeförderer vorauszusehen, welche Dienste diese Postbeförderer anbieten werden, die dann separat abgerechnet werden müssen. Frankiermaschinen müßten somit bei Bedarf im Werk oder vom Servicetechniker für neue Postbeförderer oder neue Dienste umgerüstet werden, was sehr aufwendig wäre. Die Abrechnungsberichte müssen ebenfalls durch einen separaten zweiten Drucker ausgedruckt werden. Zur Absicherung von Registerwerten ist eine Gültigkeitsüberprüfung durch den Mikroprozessor vorgesehen. Für jeden Ausdruck von Abrechnungsberichten generiert der Mikroprozessor einen Gültigkeitscode für Registerwerte, der zusammen mit diesen ausgedruckt wird.

Aus dem EP 717 376 A2 ist eine Frankiermaschine und ein Kommunikationsverfahren zu einer Datenzentrale bekannt, sowohl zur Registerabfrage und Guthabennachladung, als auch für andere administrative Zwecke. Die Kommunikation kann on-line via Modem oder off-line via Chipkarte erfolgen. Zur Authentifikation der Daten wird ein DES CBC mode (Data Encrytion Standard & Cipher Block Chaining) eingesetzt. Die Frankiermaschine weist Bestimmungsmittel für mindestens eine Gruppe an Postklassen auf. Die Frankiermaschine hat einen Stückzähler für jede Postklasse, um die Anzahl an frankierten Poststücken je Postklasse zu zählen. Die Postklassen sind für Portowerte durch obere und untere Grenzwerte definiert. Die Grenzwerte werden temporär in der Frankiermaschine gespeichert. Die Datenzentrale kann die mindestens eine Gruppe an Postklassen, insbesondere die oberen und unteren Grenzwerte für eine jede Postklasse, definieren. Die Datenzentrale kann diese Definition zu vorbestimmten Zeiten ändern und die Benutzung der Frankiermaschine begrenzen, beispielsweise zeitlich, stückzahlmäßig und bezüglich eines kumulativen Wertes. Allerdings kann die zu Grunde liegende Statistikstruktur nur voll oder begrenzt benutzt aber nicht grundlegend geändert werden.

Es war die Aufgabe zu lösen, die Nachteile des Standes der Technik zu überwinden und eine generelle Strukturänderung für eine im Aufbau beliebige veränderbare Statistik zu ermöglichen. Die Erfassung einer verlangten Dienstleistung oder Frankiermaschinenbenutzungsinformation soll in vielfältiger Form möglich und bei Bedarf veränderbar sein. Die zu schaffende Lösung soll auch die in späterer Zeit aufkommende, d.h. von der Postbehörde bzw. einem privaten Postbeförderer erst nachträglich geäußerte Spezialwünsche und Anforderungen zur Erfassung einer bestimmten Dienstleistung oder Frankiermaschinenbenutzungsinformation berücksichtigen können.

Die Eingabe der Erfassungsbedingungen und der Abruf der erfaßten Daten soll automatisch möglichst ohne Zutun des Frankiermaschinenbenutzers erfolgen. Dabei soll die Frankiermaschine nicht bzw. nicht unnötig lange blockiert werden.

Dabei war eine flexiblere Lösung zur speziellen Erfassung einer Frankiermaschinenbenutzungsinformation, geeignet zur Abrechnung gegenüber der Postbehörde bzw. einem privaten Postbeförderer einerseits und andererseits für eine Vielzahl an Benutzern von ein und derselben Frankiermaschine bzw. zur abteilungsweisen Abrechnung zu schaffen. Eine Unteraufgabe ist es, die Sicherheit der Abrechnungs- und Benutzungsdaten in der Frankiermaschine zu verbessern, die in einer vorbestimmten Art und Weise statistisch in der Frankiermaschine gespeichert werden und die bei einer Kommunikation mit der Datenzentrale abgefragt werden.

Die Aufgabe wird mit den Merkmalen des Anspruchs 1 gelöst.

Die Erfindung geht von dem Bedürfnis einiger Postbeförderer aus, ihre Arbeitsweise zu optimieren. Erfindungsgemäß wird eine sehr flexible Lösung geschaffen, eine Erfassung nach Klassen, insbesondere für eine Abrechnung nach vorverdichteten Klassen, in einer elektronischen Frankiermaschine zu installieren, wobei die Postbeförderer jeweils nach ihren eigenen Bedürfnissen Klassen definieren. Somit darf die Erfassung nach Statistikklassen in einem Statistikmodus der elektronischen Fankiermaschine nicht fest installiert werden, sondern es wird eine Automatik vorgeschlagen, per Modem oder mittels eines anderen geeigneten Übertragungsmittels, den Statistikmodus zu wechseln. Das erfolgt bei Bedarf oder mindestens dann, wenn zu einem neuen Postbeförderer gewechselt wird, dessen Anweisungen noch nicht in der Frankiermaschine gespeichert sind. Innerhalb eines Frankiermodus im Programmablauf einer Frankiermaschine existiert ein durch vorgenannte Anweisungen erfindungsgemäß definierter Statistikmodus, in welchem die Durchführung einer beliebigen statistischen Benutzungsdatenerfassung möglich ist. Zum Verwalten einer universell änderbaren Frankierstatistik gibt die Datenzentrale DZ der Frankiermaschine FM über ein geeignetes Protokoll die gerade interessierende zu führende Statistikform vor und definiert eine Vorverdichtungsvorschrift für die Klassen. Nach Übermittlung, Verifizierung und Zwischenspeicherung von neuen Statistikanweisungsdaten während einer erfindungsgemäß weiteren Transaktion wird eine Information bezogen auf die zwischengespeicherten gültigen neuen Statistikanweisungsdaten zur Datenzentrale übermittelt. Nach deren Prüfung übermittelt die Datenzentrale Anweisungen, die neuen Statistikanweisungsdaten in einem nichtflüchtigen Speicher (5a, 5b, 16) zu speichern. Bei einem, im Ergebnis des Überprüfens auf Vorliegen einer erfolgreich beendeten Transaktion bzw. auf Fehlerfreiheit, festgestellten Fehler wird eine Fehlerroutine durchlaufen und ggf. die Frankiermaschine zur Wiederholung der Schritte veranlaßt. Die Frankiermaschine FM ordnet nach einer entsprechenden Vorgabe von Anweisungen, d.h. nach Vorgabe der ihrem Prozessor mitgeteilten bzw. voreingespeicherten Frankierparameter, die interessierenden Daten selbsttätig in passende Register ein. Dazu ist vorgesehen, daß die Frankiermaschine einen geeigneten separaten oder nichtflüchtigen Speicher mit separaten internen Speicherbereichen aufweist, wobei mindestens einer der internen Speicherbereiche die vorgenannten Anweisungen und mindestens ein anderer interner Speicherbereiche die vorgenannten Daten nichtflüchtig speichert.

Zusätzlich erfolgt während der vorgenannten Kommunikation eine Übermittlung einer Information von der Frankiermaschine zur Datenzentrale und eine Prüfung der Information in der Datenzentrale, wobei die Information auf die zwischengespeicherten gültigen neuen Statistikanweisungsdaten bezogen ist. Die zur Datenzentrale übermittelte Information enthält vorzugsweise die Versionsnummer und eine Prüfsumme über die Anweisungsdaten oder eine DES-verschlüsselte Prüfsumme bzw. eine RSA-Signatur. Die nichtflüchtige Speicherung erfolgt in der Frankiermaschine nur bei gegebenen Bezug, wogegen bei fehlendem Bezug eine Fehlerroutine durchlaufen wird.

Die Datenzentrale gibt der Frankiermaschine durch ein unten näher beschriebenes Protokoll Anweisungen vor, wie die Frankierungen bestimmten Statistikklassen zuzuordnen sind. Diese Anweisungen werden gegebenenfalls periodisch gegeben, wenn sich die Frankiermaschine periodisch bei der Datenzentrale meldet. Eine entsprechende Automatik ist in der Frankiermaschine vorgesehen, damit vorzugsweise nach Zeitablauf eine Kommunikation erfolgt oder nachdem eine vorbestimmte Anzahl an Frankierungen erreicht wird. Ebenfalls kann in Verbindung mit einer Guthabennachladung eine solche Statistikmodusnachladung durchgeführt werden. In der Frankermaschine sind dafür separate Kommunikationsmodi oder ein entsprechend ausgebildeter Kommunikationsmodus vorgesehen, um bei einer automatisch hergestellten Kommunikation die eingestellten Parameter für die Guthabennachladung unverändert beizubehalten ohne eine Guthabennachladung auszuführen.

Nur begrenzt durch die entsprechende Speicherkapazität der Frankiermaschine, ist die Zahl der Statistikklassen prinzipiell unbegrenzt. Durch Akkumulierung von Daten, vorzugsweise durch Zählen von Stückzahlen je Klasse, gelingt es, die zu speichernde und zu übertragende Datenmenge dennoch in vertretbaren Grenzen, d.h. relativ klein zu halten. Erforderlichenfalls wird eine Vorverdichtung von Daten in der Frankiermaschine auf andere Weise, d.h. nach einer anderen mathematischen Funktion durchgeführt, bevor die Speicherung in Registern erfolgt. Die Erfassung erfolgt dann nach den so definierten Statistikklassen, wobei alle Überprüfungsschritte auf Zugehörigkeit zur jeweiligen Statistikklassen durchlaufen werden und eine Interpretation entsprechend der Anweisungen angewendet auf die zu erfassenden Daten erfolgt.

Handelsübliche OTP-Prozessoren können alle sicherheitsrelevanten Programmteile und den Algorithmus zum Bilden einer DES-verschlüsselten Checksumme (MAC) im Inneren des Prozessorgehäuses speichern, was in der vorerwähnten deutschen Patentanmeldung DE 19534530 A1 näher beschrieben wurde. Die zur vorgenannten Lösung weiterentwikkelte Lösung enthält einerseits im Frankiermodus zusätzlich einen Statistikmodus, in welchem Statistik und/oder Abrechnungsdaten mittels MAC gegen Manipulation abgesichert werden können. Erfindungsgemäß erfolgt die Abrechnung und/oder Erfassung von Benutzungsdaten nach Statistikklassen, welche mittels Parameterarten und zugehörigen Beschreibungen und Verknüpfungen durch die Datenzentrale frei definiert und an die Frankiermaschine übermittelt werden. Durch eine kumulative MAC-Bildung kann die Anzahl an abzusichernden Daten größer sein, als die bei der bisher üblichen MAC-Bildung. Dabei wird ein signifikanter Zuwachs an Sicherheit bei der Abspeicherung der Abrechnungsdaten in der Frankiermaschine erreicht, ohne daß die Frankiermaschine unnötig lange blockiert ist.

Auch im Grenzfall, bei einer sehr hohen Anzahl an abzusichernden Daten, können alle Daten dennoch MAC-gesichert gespeichert werden. Das ist beispielsweise der Fall, wenn eine Anzahl an Statistikklassen mit der Anzahl an möglichen Portowerten übereinstimmt und/oder Statistikklassen, in welchen zusätzlich Beförderer- und/oder kostenstellenbezogen Buchungen vorgenommen werden, d.h. Buchungen die für unterschiedliche Benutzer unterschiedlich definiert werden.

Der Abruf der Abrechnungs- bzw. Benutzungsdaten erfolgt bedarfsweise oder im Zusammenhang mit der Fernnachladung der Frankiermaschine mit einem Guthaben (Nachkreditierung), wobei die Sicherheitsmaßnahmen der Guthaben-Nachkreditierung mit genutzt werden.

Andererseits wird gezielt eine noch höhere Sicherheit der Frankiermaschine durch automatische periodische Abrechnung im Verlauf einer automatischen Kommunikation mit einer entfernten Datenzentrale erreicht. Diese läuft ab, ohne den Benutzer zu stören und ohne ihn zu manuellen Eingaben zu veranlassen. Die Möglichkeit zur elektronischen Abrechnung per Modem gegenüber der Postbehörde bzw. einem privaten Postbeförderer einerseits und andererseits für eine Vielzahl an Benutzern von ein und derselben Frankiermaschine, vermeidet vorteilhaft den Ausdruck umfangreicher Abrechnungsberichte. Ein zweiter Drucker ist nicht erforderlich. Die elektronische Abrechnung per Modem erfolgt innerhalb einer Transaktion in einer weiteren Transaktion kann von der Datenzentrale eine neue gültige vorbestimmte Anweisung zur speziellen Abrechnung der von dem selektierten Postbeförderer angebotenen Dienste übermittelt werden, was nachfolgend mit Statistikmodusnachladung bezeichnet wird.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1a,      Blockschaltbild einer Frankiermaschine,

Figur 1b,      Variante mit separaten Kostenstellenspeicher und mit OTP in der Steuereinrichtung der Frankiermaschine,

Figur 2,        Gesamtablaufplan für die Frankiermaschine nach der erfindungsgemäßen Lösung,

Figur 3,        Ablaufplan für den ersten Kommunikationsmodus I,

Figur 4, 5     Transaktionen im ersten Kommunikationsmodus I,

Figur 6, 7, 8     Details der Eingabe- und Anzeigeroutine mit Abfragen,

Figur 9,           Ablaufplan für den zweiten Kommunikationsmodus II,

Figur 10,         Transaktionen im zweiten Kommunikationsmodus II,

Figur 11,         Blockdiagramm zur Definition der Statistikmodusanweisungen,

Figur 12 a, b     Flußpläne für den Ablauf im Statistikmodus,

Figur 13 a, b     bildlich verdeutlichte Definition einer Statistik-Klasse.

Die Figur 1a zeigt ein Blockschaltbild der erfindungsgemäßen Frankiermaschine mit einem Druckermodul 1 für ein vollelektronisch erzeugtes Frankierbild, mit mindestens einem mehrere Betätigungselemente aufweisenden Eingabemittel 2, einer Anzeigeeinheit 3, einem die Kommunikation mit einer Datenzentrale herstellenden MODEM 23, weitere Eingabemittel 21 bzw. Waage 22 weiche über einen Ein/Ausgabe-Steuermodul 4 mit einer Steuereinrichtung 6 gekoppelt sind und mit nichtflüchtigen Speichern 5a, 5b bzw. 9, 10 und 11 für Daten bzw. Programme, welche die variablen bzw. die konstanten Teile des Frankierbildes einschließen.

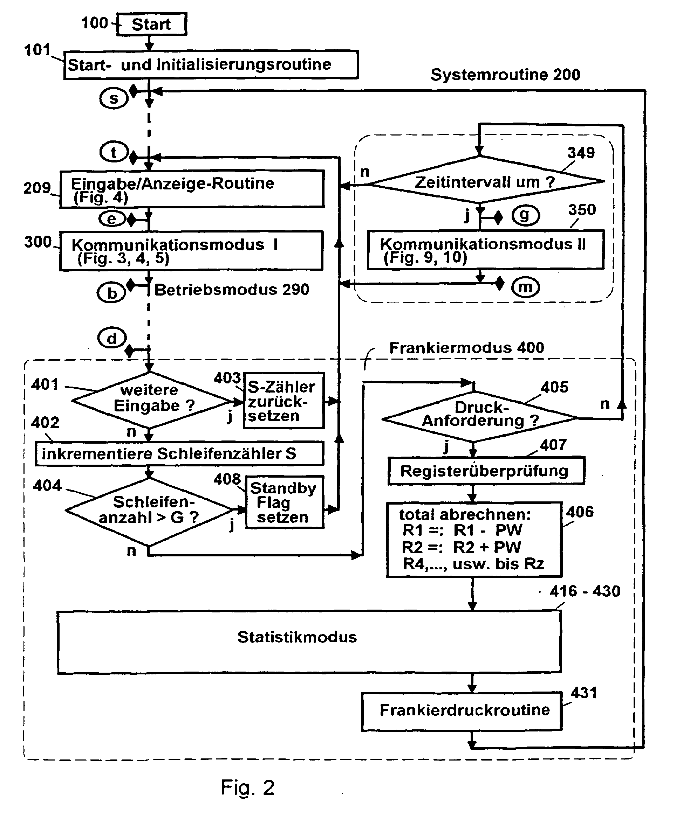

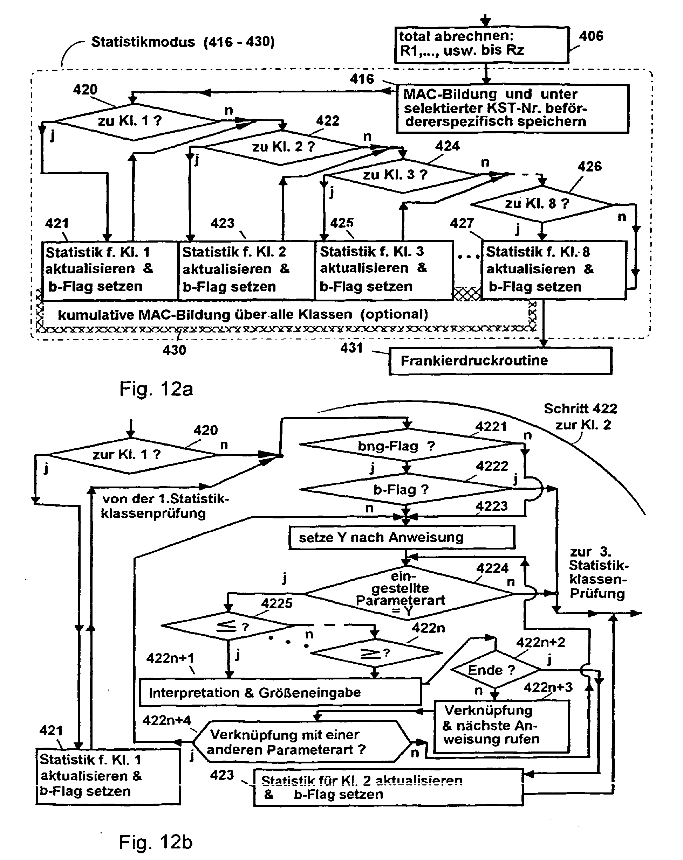

In der vorerwähnten deutschen Patentanmeldung DE 19534530 A1 wurden schon nähere Ausführungen zu einzelnen Funktionen der Mittel gemacht. Ein Charakterspeicher 9 liefert die nötigen Druckdaten für die variablen Teile des Frankierbildes zu einen flüchtigen Arbeitsspeicher 7. Die Steuereinrichtung 6 weist einen Mikroprozessor µP auf, der mit dem Ein/Ausgabe-Steuermodul 4, mit dem Charakterspeicher 9, mit dem flüchtigen Arbeitsspeicher 7 und mit nichtflüchtigen Arbeitsspeichem 5a, 5b (mit internen Kostenstellenspeicher) bzw. (gestrichelt gezeichnet) mit einem zusätzlichen Kostenstellenspeicher 16, mit einem Programmspeicher 11, mit dem Motor einer Transport- bzw. Vorschubvorrichtung ggf. mit Streifenauslösung 12, einem Encoder (Codierscheibe) 13 sowie mit einem Uhren/Datums-Baustein 8 in Verbindung steht. Derjenige Speicherbaustein, welcher den nichtflüchtigen Arbeitsspeicher 5b umfaßt, kann beispielsweise ein EEPROM sein, der durch mindestens eine zusätzliche Maßnahme, beispielsweise Aufkleben auf der Leiterplatte, Versiegeln oder Vergießen mit Epoxidharz, gegen Entnahme gesichert wird. Der Kostenstellenspeicher kann separat oder beispielsweise innerhalb des nichtflüchtigen Speichers 5a realisiert werden, indem besondere Speicherbereiche bereitgestellt werden. Erfindungsgemäß sind nun zur Führung einer beliebigen Statistik separate Speicherbereiche vorgesehen. Die einzelnen Speicher können in mehreren physikalisch getrennten oder in nicht gezeigter Weise in wenigen Bausteinen zusammengefaßt verwirklicht sein. Die zur Führung einer beliebigen Statistik vorgesehenen separaten Speicherbereiche 16-01, 16-02 und 16-03 schließen wenigstens einen Speicherbereich 16-03 ein, in welchem die jeweilig gültige aber definiert veränderbare Abrechnungsstruktur gespeichert vorliegt. In einem Statistikmodus (Fig.2, Fig.12a und 12b) wird nach dieser Abrechnungsstruktur eine Statistik vom Mikroprozessor entsprechend durchgeführt und die Daten im entsprechend dafür eingerichteten bzw. vorgesehenen Speicherbereich 16-02 gespeichert. Eine definierte Veränderung der Abrechnungsstruktur erfolgt - nur falls Bedarf besteht - in einem Kommunikationsmodus I oder II (Fig.2, 3, 4, 5 oder 9,10). Der Statistikmodus mit den Schritten 416 bis 430 wird innerhalb eines Frankiermodus 400 vom Mikroprozessor aufgerufen.

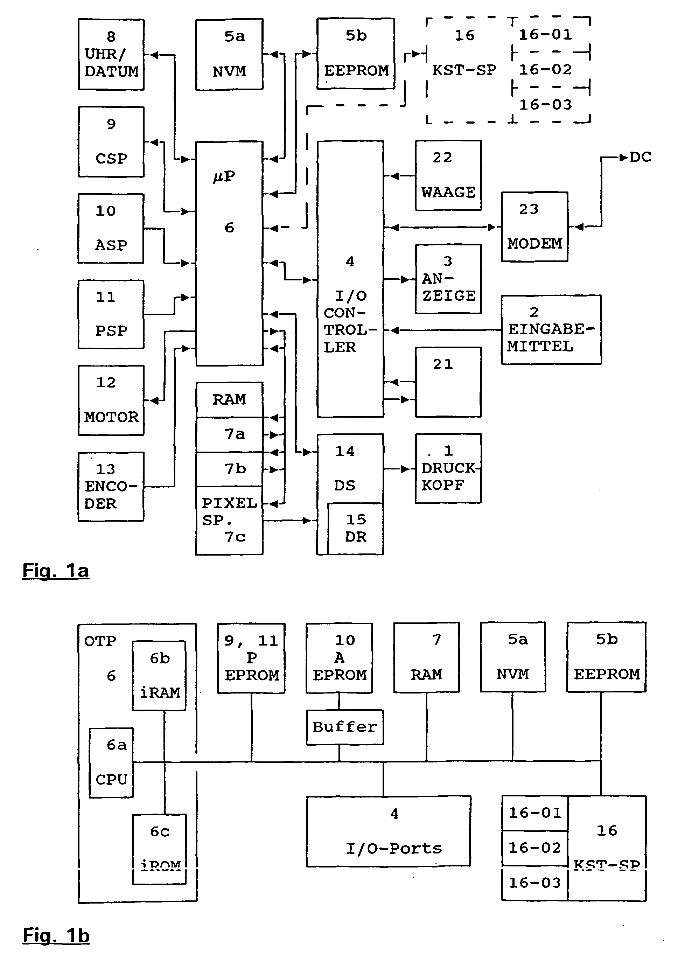

In der Figur 1b ist ein Blockschaltbild einer elektronischen Frankiermaschine mit erfindungsgemäß erhöhter Sicherheit gezeigt. Die Erfindung basiert auf einer Frankiermaschine mit einem Mikroprozessor, der einen internen OTP-ROM enthält, der ein Auslesen des darin enthaltenen Programmcodes nicht erlaubt. Außerdem sind sicherheitsrelevante Daten im internen OTP-ROM gespeichert. Zur Verhinderung des Auslesens durch einen externen Eingriff können im Mikroprozessor entsprechende Sicherungsbits während der Herstellung der Frankiermaschine gesetzt werden. Dies kann ein handelsüblicher OTP-Prozessor sein, den man nach dem Programmiervorgang durch setzen/brennen einer Auslesesperre in einen solchen Zustand versetzt oder dies kann ein Mikroprozessor mit maskenprogrammierbarem ROM sein, der nach dem Herstellungsprozeß ein Auslesen des Programmcodes nicht mehr erlaubt. Die Frankiermaschine kann auch mit einem OTP-Typ ausgerüstet werden, der ein Auslesen von sicherheitsrelevanten Daten und Programmen in verschlüsselter Form gestattet (Encryption-Table). Das hat den Vorteil, daß eine Kontrolle darüber möglich ist, ob die Daten ordnungsgemäß gespeichert wurden. Da der gesamte zum Betrieb einer Frankiermaschine benötigte Programmcode nicht in den mikropozessor-internen ROM paßt, wird in einem weiteren EPROM der größere Teil des Programmcodes gespeichert, der über den Mikroprozessorbus Programmcode dem Mikroprozessor zur Verfügung stellt. Dafür kann eine Anordnung angewendet werden, die den Programmspeicher in Speichersegmente aufteilt, sogenannte Speicherbänke, die es erlauben den Programmspeicherbereich über den Adressbereich des Mikroprozessor durch Benutzung von Mikroprozessor-Portleitungen beliebig zu vergrößern.

In der Figur 1 b sind Details des Blockschaltbildes der elektronischen Frankiermaschine für eine Variante mit OTP in der Steuereinrichtung gezeigt, welche prinzipiell in der deutschen Patentanmeldung DE 19534530 A1 mit dem Titel: Verfahren zur Absicherung von Daten und Programmcode einer elektronischen Frankiermaschine auch in ihrer Funktion erläutert wurden.

In der Figur 2 ist ein Gesamtablaufplan für eine Frankiermaschine mit erfindungsgemäß erhöhter Sicherheit gezeigt. Daraus geht hervor, daß nach einem Einschalten der Frankiermaschine im Schritt Start 100 innerhalb einer Startroutine 101 eine Funktionsprüfung mit anschließender Initialisierung erfolgt. Ein Programmcode im nichtlesbaren internen OTP-ROM erlaubt nun mehrere vorteilhafte Startsicherheitsüberprüfungsroutinen, wie sie in der deutschen Patentanmeldung DE 19534530 A1 mit dem Titel: Verfahren zur Absicherung von Daten und Programmcode einer elektronischen Frankiermaschine näher dargelegt wurden. Anschließend wird dann auf den Punkt s einer Systemroutine 200 verzweigt.

Die bereits während der Initialisierungroutine 101 aufgerufenen konstanten Teile des Frankierbildes stehen im Pixelspeicherbereich I im flüchtigen Pixelspeicher 7c ständig dekodiert zur Verfügung. Für eine schnelle Änderung der Fensterdaten, existiert ein zweiter Speicherbereich B im nichtflüchtigen Arbeitsspeicher 5. Die Zahlenketten (strings), die für die Erzeugung der Eingabedaten mit einer Tastatur 2 oder aber über eine an die Ein/Ausgabeeinrichtung 4 angeschlossene, den Portowert errechnende, elektronische Waage 22 eingegeben werden, werden automatisch im Speicherbereich D des nichtflüchtigen Arbeitsspeichers 5 gespeichert. Außerdem bleiben auch Datensätze der Subspeicherbereiche, zum Beispiel Bj, C usw., erhalten. Damit ist gesichert, daß die letzten Eingabegrößen auch beim Ausschalten der Frankiermaschine erhalten bleiben, so daß nach dem Einschalten automatisch der Portowert im Wertabdruck entsprechend der letzten Eingabe vor dem Ausschalten der Frankiermaschine und das Datum im Tagesstempel entsprechend dem aktuellem Datum vorgegeben wird. Beim Übergang in die Systemroutine 200 wird zunächst ein - in der Figur 2 nicht dargestellter - Schritt 201 zum automatischen Datenaufruf vorgenannter nichtflüchtig gespeicherter Daten erreicht.

Zwischen den Punkten s und t der Systemroutine 200 können eine Vielzahl weiterer Schritte liegen, die die Datensicherheit verbessern, wie das bereits in der deutschen Patentanmeldung DE 19534530 A1 mit dem Titel: Verfahren zur Absicherung von Daten und Programmcode einer elektronischen Frankiermaschine näher dargelegt wurde.

Dabei können weitere Schritte 202 bis 208 durchlaufen werden. Nach den Schritten wird in jedem Fall der Punkt t der Systemroutine 200 erreicht und zum Schritt 209 verzweigt. Der Benutzer hat die Möglichkeit Eingabedaten zu ändern bzw. manuell neu einzugeben. Nach erfolgter Neueingabe und Tastaturabfrage in der Eingabe/Anzeige-Routine des Schrittes 209 erfolgt im selben Schritt 209 eine Druckdatenzusammenstellung und Aufruf der erforderlichen Bildpunktdateien, wie das bereits in der deutschen Patentanmeldung DE 19534530 A1 mit dem Titel: Verfahren zur Absicherung von Daten und Programmcode einer elektronischen Frankiermaschine näher dargelegt wurde.

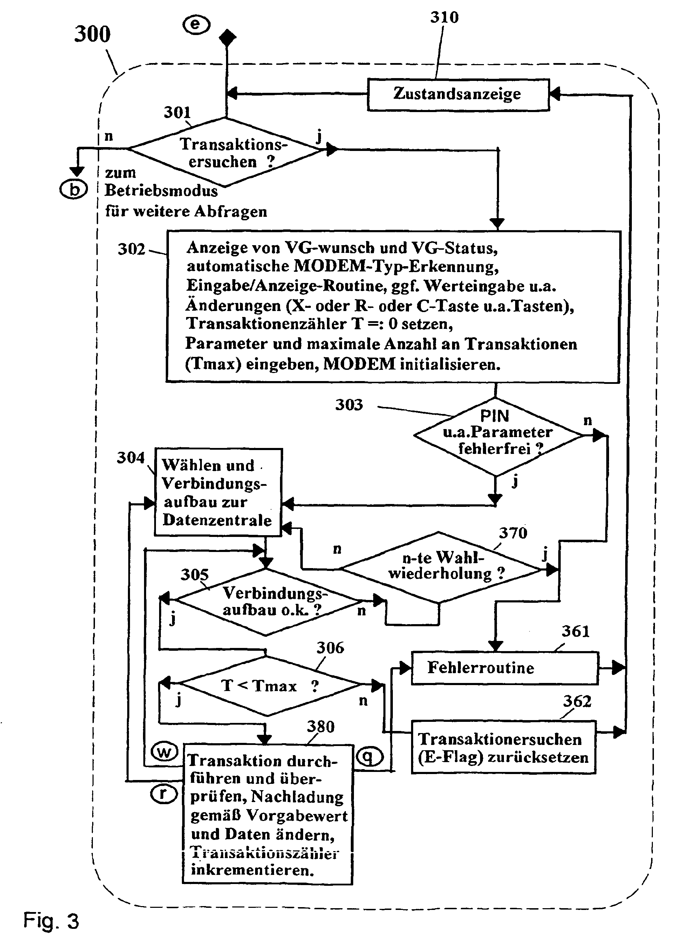

Nach dem Schritt 209, wird unter der Voraussetzung, daß keine relevante Mängel festgestellt wurden, nun der Punkt e der Systemroutine 200, d. h. der Beginn eines Kommunikationsmodus 300 erreicht. Aus der Figur 3 ist ein Ablaufplan für den ersten Kommunikationsmodus I ersichtlich, der weiter unten noch genauer erläutert wird. Gleich zu Beginn des Kommunikationsmodus 300 wird in einem Schritt 301 abgefragt, ob ein Transaktionsersuchen vorliegt. Ist das nicht der Fall, wird der Kommunikationsmodus 300 wieder verlassen und der Punkt b, d.h. ein Betriebsmodus 290 erreicht.

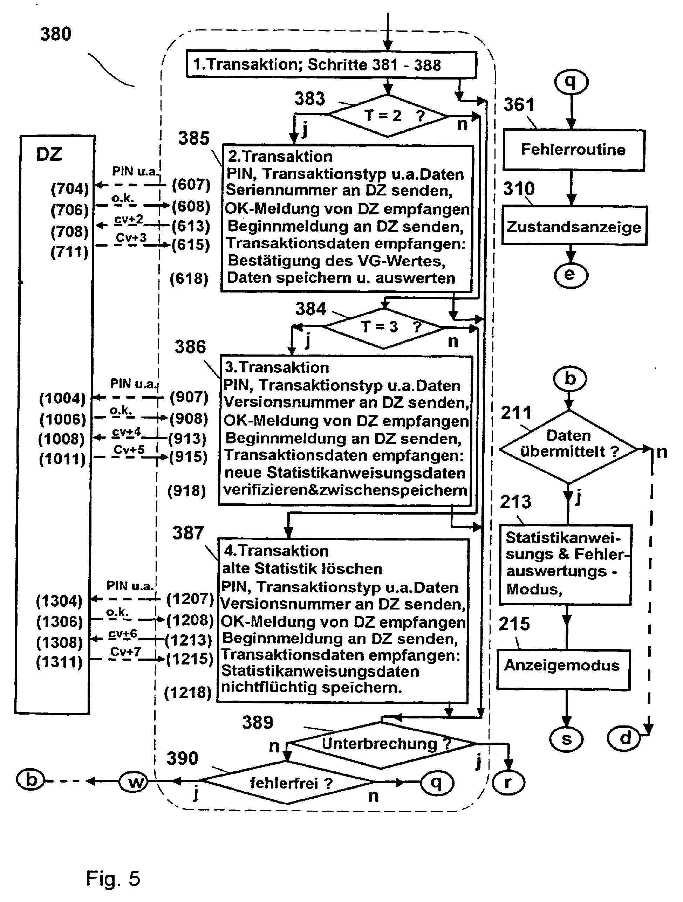

Zwischen den Punkten b und d des Betriebsmodus 290 können eine Vielzahl weiterer Schritte liegen. Im Schritt 211 können die im Kommunikationsmodus übermittelten Daten oder ein gesetztes Standby Flag festgestellt werden (Fig.5). In diesem Fall ist zur weiteren Datenauswertung auf den Schritt 213 zu verzweigen. Andere Abfrageschritte sind erforderlich, um bei Testanforderung 212 in den Testmodus 216 oder um bei beabsichtigter Registerstandüberprüfung 214 in einen Anzeigemodus 215 zu gelangen, was in der o.g. deutschen Patentanmeldung DE 19534530 A1 mit dem Titel: Verfahren zur Absicherung von Daten und Programmcode einer elektronischen Frankiermaschine, näher dargelegt wurde.

Ein spezieller - in der Figur 2 nicht gezeigter - Schritt betrifft eine Abfrage, ob über den frankiermaschineninternen Drucker Quittungsbelege über erfolgte Abrechnungen für jede Kostenstelle ausgedruckt werden sollen. Ein Verfahren und Anordnung für einen internen Kostenstellendruck wurde in der europäischen Anmeldung EP 580 274 A2 beschrieben.

Ein spezieller weiterer - in der Figur 2 nicht gezeigter - Schritt betrifft eine Abfrage, ob über den frankierma-schineninternem Drucker Registerdaten oder andere frankiermaschineninterne Daten ausgedruckt werden sollen. Weitere Abfrageschritte zur Umschaltung in weitere Modi können auf vergleichbare Weise ebenso in den Gesamtablaufplan gemäß Figur 2 eingefügt werden oder sind bereits Bestandteil bzw. Subschritte der Eingabe/Anzeigeroutine im Schritt 209, wie das in der europäischen Anmeldung EP 780 803 A2, mit dem Titel: Verfahren und Anordnung zur Dateneingabe in eine Frankiermaschine, beschrieben wurde.

Wie aus der Figur 1a hervorgeht, stehen der Arbeitsspeicher 7b und der Pixelspeicher 7c mit dem Druckermodul 1 über eine ein Druckregister DR 15 und eine Ausgabelogik aufweisende Druckersteuerung 14 in Verbindung. Der Pixelspeicher 7c ist ausgangsseitig an einen ersten Eingang der Druckersteuerung 14 geschaltet, an deren weiteren Steuereingängen Ausgangssignale der Mikroprozessorsteuereinrichtung 6 anliegen. Stellt ein nicht dargestellter am Mikroprozessor angeschalteter Briefdetektor einen Brief im Frankierdruckerbereich der Frankiermaschine fest, wird bekanntlich ein Druckanforderungssignal gebildet. Die Abrechnung erfolgt vor dem Drucken des Frankierbildes. Sind alle Spalten eines Frankierbildes gedruckt worden, wird wieder zur Systemroutine 200 zurückverzweigt. Ist eine Waage 22 an der Frankiermaschine angeschlossen, wird im Schritt 201 der Systemroutine 200, der von der Waage 22 übermittelte Portowert aus dem Speicherbereich D entnommen. Das Zusammenwirken von Frankiermaschine und Waage unter der Bedingung, daß eine Vielzahl an auswählbaren Postbeförderem unterschiedliche Tarife haben, ist bereits in der EP 724 141 A1 (Verfahren zur Dateneingabe in eine Waage) näher erläutert worden.

Werden Eingaben automatisch oder manuell getätigt, wird ggf. nach Überprüfung der ordnungsgemäßen Funktion der Punkt d, d.h. der Frankiermodus 400 erreicht. Im ersten Schritt 401 des Frankiermodus 400 wird geprüft, ob eine Eingabe vorliegt. Bei einer erneuten Eingabeanforderung, welche im Schritt 401 feststellbar ist, wird über einen dritten Schritt 403 mit Rücksetzen eines Schleifenzählers S zum Punkt t der Systemroutine 200 und danach auf den Schritt 209 zur Eingabe/Anzeige-Routine zurückverzweigt. Beispielsweise kann eine Kostenstellennummer durch den Benutzer eingegeben werden, welcher eine abteilungsweise Abrechnung, d.h. nach der jeweiligen Kostenstellennummer aufgelistete Abrechnungsdaten zu speichern wünscht. Insbesonderer kann es für Kleinbetriebe vorteilhaft sein, wenn mehrere Benutzer ein und die selbe Frankiermaschine benutzen, aber getrennt ggf. bei unterschiedlichen Postbeförderem abrechnen wollen. Für eine einzige Frankiermaschine kann eine Vielzahl an Abrechnungen, entsprechend der Anzahl an Kostenstellen durchgeführt werden.

Anderenfalls, d.h. es liegt keine Eingabeanforderung vor, so wird über die Schritte 402 und 404 zur Erhöhung des Schleifenzählers S und zur Prüfung der Anzahl an Durchläufen auf einen fünften Schritt 405 verzweigt, um ggf. die Druckanforderung festzustellen. Durch einen Briefsensor wird der zu frankierende Brief detektiert und damit eine Druckanforderung ausgelöst. Somit kann auf die Abrechnungsroutine im sechsten Schritt 406 hier über einen siebenten Schritt 407 zur Registerüberprüfung verzweigt werden. Die Abrechnungsdaten werden im sechsten Schritt 406 außerdem unter der selektierten Kostenstellennummer befördererspezifisch abgerechnet und gespeichert. Gegebenenfalls werden weitere Abfragen in den nachfolgenden Schritten 406 und 407 getätigt. Beispielsweise wird im Schritt 407 das Vorhandensein authentischer Registerwerte anhand eines MAC überprüft. Außerdem können, beispielsweise mit den verschiedensten Bezahlungsmöglichkeiten in Zusammenhang stehende, weitere - hier nicht gezeigte - Schritte durchlaufen werden, bevor die Frankierdruckroutine 431 erreicht wird.

Ein spezieller Zähler wird im Schritt 406, d.h. während der unmittelbar vor dem Druck erfolgenden Abrechnungsroutine veranlaßt, einen Zählschritt weiterzuzählen, somit kann die Anzahl alle bisher durchgeführten Frankierungen erfaßt werden. Ebenso werden entsprechend der eingegebenen Kostenstelle die Anzahl von gedruckten Briefen und die aktuellen Werte in der Abrechnungsroutine 406 registriert und stehen in den Postregistern in nichtflüchtigen Speichern 5a, 5b bzw. 16 der Frankiermaschine für eine spätere Auswertung zur Verfügung. Alle vorgenannten Eingaben bleiben gespeichert und können erst wieder nach Verlassen des Frankiermodus verändert werden.

Sollen beispielsweise im Frankiermodus 400 die Beförderer- und Kostenstellen-Informationen zur Abrechnung verwendet werden, dann wird falls eine Druckanforderung im fünften Schritt 405 erkannt wird, zuerst ein postbefördererspezifischer Speicherbereich selektiert (Subschritt 4061 zum Schritt 406 nicht dargestellt) und dann ein weiterer (nicht dargestellter) Subschritt 4062 erreicht, um Subadressen zu bilden. Die Subadressen werden für die Speicherbereiche von erstens einer Kostenstellennummer Null und von zweitens einer selektierten Kostenstellennummer, die verschieden von Null für die abteilungsbezogene Abrechnung eingestellt wurde, gebildet. Unter der Kostenstellennummer Null erfolgt eine Abrechnung ohne Aufspaltung in einzelne Kostenstellen bzw. Abteilungen über die Summe aller Kostenstellen für den jeweils selektierten einzelnen Beförderer m (mit m = 1 bis I), wie das in der - zum Anmeldezeitpunkt nicht vorveröffentlichten - deutschen Anmeldung Nr. 196 17 473.2, mit dem Titel: Verfahren und Anordnung zur Datenverarbeitung in einem Postverarbeitungssystem mit einer Frankiermaschine, näher dargelegt wird. Periodisch oder in frei gewählten Zeiträumen kann nach einer Abrechnung und Ausgabe einer Auflistung zu einer Kostenstelle eine Rücksetzung auf Null sowohl für den Portoverbrauch als auch für die Stückzahl erfolgen. Die Ausgabe einer solchen Auflistung kann bei Bedarf beispielsweise als Kostenstellenausdruck oder als befördererbezogener Ausdruck durch die Frankiermaschine auf einen Streifen erfolgen.

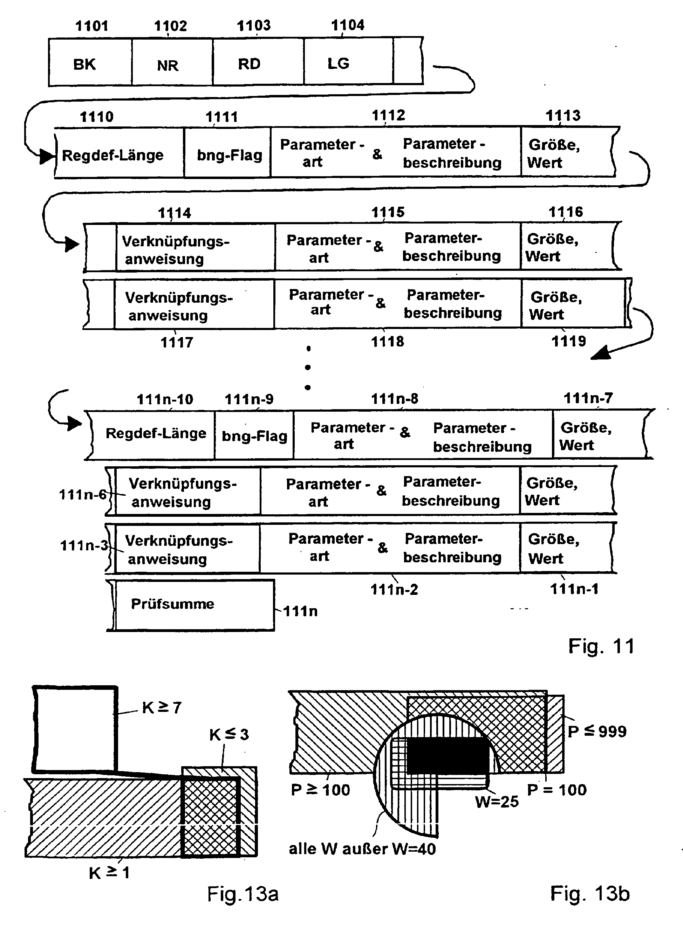

Erfindungsgemäß wird nun in einem Statistikmodus eine zusätzliche Statistik innerhalb der Frankiermaschine nach den Wünschen des jeweiligen Postbeförderers geführt. Es sind verschiedenste Versionen möglich, wie in den nach dem Schritt 406 folgenden Schritten des Statistikmodus weiter verfahren wird, bevor der Frankierdruck im Schritt 431 ausgeführt wird. Der Frankiermaschinenbenutzer hat keine Einflußmöglichkeit auf die Struktur bzw. Art und Weise der Datenerfassung im Statistikmodus. Eine Einflußmöglichkeit auf die Erfassung der interessierenden Daten besteht mittels der Statistikmodusnachladung, d.h. mittels der Übermittlung von Anweisungen von der Datenzentrale an die Frankiermaschine während eines Kommunikationsmodus I bzw. II. In der Figur 11 wird ein Blockdiagramm der Anweisung zur Definition des Statistikmodus dargestellt, welche maximale Definitionsfreiheit und Flexibilität erlaubt, was noch näher erläutert wird.

Der Statistikmodus, welcher innerhalb des Frankiermodus 400 angesteuert wird, bevor die Frankierdruckroutine 431 erreicht wird, umfaßt - in der Fig. 2 nicht gezeigte - Vorbereitungs- und/oder Abfrageschritte und zugehörige Buchungsschritte, um eine Statistik für die jeweils relevante Klasse zu aktualisieren. Mindestens ein erfindungsgemäßer zwanzigster Abfrageschritt 420 eines relevanten Statistikmodus wird durchlaufen, um die Zugehörigkeit von Daten der Frankiermaschinenbenutzung zu mindestens einer ersten Klasse 1 zu überprüfen. Bei festgestellter Zugehörigkeit wird in einem einundzwanzigsten Schritt 421 eine Statistik für diese erste Klasse 1 aktualisiert. Anschließend und/oder anderenfalls wird auf den nächsten Überprüfungsschritt 422 verzweigt, ggf. die Statistik für die nächste Klasse aktualisiert oder noch weiter verzweigt usw. Zur Vereinfachung der Erläuterung wird anhand der in den Figuren 12a und 12b dargestellten speziellen Flußpläne für den Statistikmodus eine Anzahl möglicher Abläufe erläutert.

In der - in Figur 12a - dargestellten Version erfolgt optional vor den wesentlichen Schritten Statistikmodus in einem sechzehnten Schritt 416 zunächst eine Absicherung der Abrechnungsdaten ausgewählter Register im NVRAM der Frankiermaschine durch MAC-Bildung. Eine solche Absicherung kann beispielsweise erfolgen, wie bereits in der deutschen Patentanmeldung DE 19534530 A1 mit dem Titel: Verfahren zur Absicherung von Daten und Programmcode einer elektronischen Frankiermaschine näher erläutert worden ist. Der MAC wird zugehörig zu den Abrechnungsdaten gespeichert. Gegebenenfalls werden unter der selektierten Kostenstellennummer beförderspezifisch Abrechnungs-daten und der zugehörige MAC im sechzehnten Schritt 416 gespeichert. Dann können weitere - nicht gezeigte beispielsweise der Vorbereitung der Speicherung nach Statistikklassen (z.B. Postklassen) dienende - Schritte durchlaufen werden bevor ein erfindungsgemäßer zwanzigster Schritt 420 eines relevanten Statistikmodus erreicht wird, um die Zugehörigkeit von Daten der Frankiermaschinenbenutzung zu einer ersten Postklasse 1 zu überprüfen. Die Zugehörigkeit wird durch Vergleich von Parameterwerten ermittelt, welche logisch verknüpft sind. Bei festgestellter Zugehörigkeit wird in einem einundzwanzigsten Schritt 421 eine Statistik für diese erste Postklasse 1 aktualisiert. Anderenfalls bzw. nach der Aktualisierung im Register für die Postklasse 1 wird auf den nächsten Überprüfungsschritt 422 verzweigt, ggf. die Statistik für die nächste Postklasse aktualisiert oder noch weiter verzweigt usw.

An einem einfachen Ausführungsbeispiel soll dieses Vorgehensweise genauer erläutert werden. Der abzurechnende Parameterwert ist beispielsweise ein Portowert und beträgt genau eine Währungseinheit (1 EURO). Im zwanzigsten Schritt 420 wird die Zugehörigkeit des abzurechnenden Portowertes zu einer ersten Postklasse 1 überprüft, die beispielsweise für die Parameterart P= 1.00 EURO von der Datenzentrale definiert wurde. Im einundzwanzigsten Schritt 421 wird nun eine Statistik für diese erste Postklasse 1 aktualisiert. Dabei wird vom Prozessor die schon früher beim Frankieren verbrauchte bisherige Stückzahl z festgestellt und dann um eins inkrementiert. In der Postklasse 1 für 1 EURO wurden bisher beispielsweise 20 Stück Frankierungen gezählt. Der kummulierte Portoverbraüch entspricht dann der Wertsumme ΣP1, die sich ergibt, aus der Multiplikation von Stückzahlwert z mit dem zugeordnetem bestimmten Postwert p.pp = 1 EURO.

$$\Sigma P1 = \ z * p.pp \ = 21 * 1.00 \ EURO \ = \ 21.00 \ EURO \qquad (1)$$

Der Eintrag der Stückzahl z = 21 erfolgt in das Register R41.pp des nichtflüchtigen Speichers 5a bzw. 5b oder in einen zusätzlichen speziellen Kostenstellenspeicher KST 16 (gestrichelt gezeichnet), der ebenfalls mit dem Mikroprozessor in Kommunikationsverbindung steht und den nichtflüchtigen Speicher 5a, 5b in geeigneter Art und Weise erweitert.
Ein Stückzahlwert z liegt nun im Register R4p.pp zugeordnet abgespeichert vor, nämlich zu dem bestimmten Portowert p.pp = 1.00 EURO. Bei einer späteren Fernwertvorgabe, beispielsweise zwecks einer Guthabennachladung, läßt sich erfindungsgemäß nun der Stückzahlwert (hier im Beispiel zugeordnet zu einem bestimmten Portowert) aus einem beliebigen oder allen Registern R4p.pp abfragen. Die Datenzentrale DZ oder der Postbeförderer kann diese Daten statistisch weiter auswerten.

Zusätzlich zur Stückzahl kann der Portoverbrauch p (in Währungseinheiten) kummuliert abgerechnet und in einem separaten Register R41ΣP gespeichert werden, was aber zur Vereinfachung hier nicht näher ausgeführt wird. Bei jedem Abrechnen wird mindestens der schon früher beim Frankieren abgerechnete Portoverbrauch P' um den aktuell zu frankierenden Portowert p.pp inkrementiert.

Wird im zwanzigsten Schritt 420 die Zugehörigkeit des abzurechnenden Porioweries zu der ersten Postklasse 1 nicht festgestellt, dann wird zum zweiundzwanzigsten Schritt 422 verzweigt, um die Zugehörigkeit des abzurechnenden Portowertes zu einer zweiten Postklasse 2 zu überprüfen. Bei festgestellter Zugehörigkeit in einem zweiundzwanzigsten Schritt 422 wird eine Statistik im dreiundzwanzigsten Schritt 423 für diese zweite Postklasse 2 entsprechend aktualisiert. Anderenfalls wird auf einen vierundzwanzigsten Schritt 424 verzweigt und ggf. im fünfundzwanzigsten Schritt 425 eine Statistik für die dritte Postklasse 3 entsprechend aktualisiert. Vom vierundzwanzigsten Schritt 424 kann entsprechend der von der Datenzentrale vorgegebenen Anzahl an Postklassen auf entsprechende weitere Abfrageschritte und zugehörige Aktualisierungsschritte verzweigt werden, um die Statistik entsprechend dem abzurechnenden Portowert bezüglich der Stückzahl z pro Postklasse und dem zugehörigen kummulativ errechneten Portoverbrauch P' zu aktualisieren. Erfindungsgemäß kann abhängig von den Statistikanweisungsdaten und den erfaßten Dienstleistungsdaten, entsprechend der in Anspruch genommenen Dienstleistung, auch nach einem Schritt zur Durchführung einer Aktualisierung der Statistik zusätzlich auf einen nächsten Abfrageschritt und zugehörigen Aktualisierungsschritt verzweigt werden.

Somit können prinzipiell immer alle Abfragefrageschritte durchlaufen werden. Die Statistikanweisung kann zusätzlich die Anweisung (bng-Flag) enthalten, daß ein solches nur dann durchgeführt wird, wenn die erfaßten Dienstleistungsdaten nicht bereits in einer Statistikklasse erfaßt wurden. Eine solche zusätzliche Anweisung (bng-Flag) wird gemäß des in Fig.12b gezeigten Subschritten des Abfrageschrittes 4221 zuerst ausgewertet.

Optional werden von den Aktualisierungsschritten (421, 423, 425, 427 ...) Daten für einen Absicherungsschritt 430 abgezweigt, um eine MAC-Absicherung über alle zu den Portoklassen abgespeicherten aktuellen Werte z und P zu legen. Vorteilhaft kann eine kumulative MAC-Bildung, beispielsweise der bekannte CBC-Mode (Cipher Block Chaining), eingesetzt werden. Darunter wird eine frühzeitige, ggf. im Schritt 416 beginnende MAC-Bildung verstanden, die immer weiter voranschreitet, während die Schritte im Statistikmodus durchlaufen und ausgewählte Zwischenergebnisse aus dem Statistikmodus in die MAC-Bildung einbezogen werden. In jedem einen Aktualisierungsschritt zugeordneten Absicherungsschritt erfolgt dabei eine DES-Verschlüsselung von Daten, umfassend die durch eine XOR-Verknüpfung von vorherigen mit gegenwärtigen Daten gebildeten Daten. Die vorherigen Daten, wurden im vorherigen Absicherungsschritt gebildet, mit ebenfalls vorherigen Daten vernüpften und DES-verschlüsselt im vorangehenden Aktualisierungsschritt. Die kumulative MAC-Bildung läuf also parallel im Absicherungsschritt 430 bis die MAC-Bildung über alle Klassen abgeschlossen ist. Daran anschließend wird der Schritt 431 der Frankierdruckroutine durchgeführt und über eine Rückverzweigung wieder der Punkt t der Systemroutine 200 (Figur 2) erreicht.

Wenn nach dem - in der Figur 2 dargestellten - Ablaufplan bei fehlender Druckanforderung aber vom fünften Schritt 405 des Frankiermodus 400 zum Punkt t der Systemroutine 200 zurückverzweigt und eine Eingabe gemäß den Subschritten der Eingabe/Anzeige-Routine 209 zum Datenwechsel abgefragt wird, kann jederzeit ein Kommunikationsersuchen gestellt oder eine andere Eingabe gemäß den auf den Schritt 300 folgenden Modi zur Testanforderung, Registercheck u.a. getätigt werden.

Es sind weitere Dienstleistungen denkbar, für welche jeweils ein gesonderter Dienstleistungsmodus vorgesehen ist, was nur der Übersichtlichkeit halber in der Fig. 2 nicht dargestellt wurde. Jeder Dienstleistungsmodus hat ebenfalls einen Statistikmodus zur Erfassung von statistischen Daten. Ein solcher Statistikmodus umfaßt eine vergleichbare Abfolge von Schritten, wie sie in den Figuren 12a, 12b dargestellt werden.

Die erfindungsgemäße Möglichkeit von der Datenzentrale entsprechend frei definierbare Anweisungen für die Abrechnung und den Statistikmodus zu erhalten, erfordert ein Modem/Telefonnetz oder ein anderes geeignetes Übertragungsmittel (Chipkarte, GSM-Mobilfunknetz), dessen Ausbildung prinzipiell schon in der europäischen Anmeldung EP 566 225 A2 mit dem Titel: "Verfahren zur Dateneingabe in eine Frankiermaschine..." erläutert wurde, nun aber auch für oben genannte Statistikanweisungen erweitert wird. Die Mittel zum Empfang der Anweisungen sind das Modem 23 oder das Eingabemittel 21 (Fig.1a). Vorgenannte anhand der Figur 11 erläuterten Anweisungen, werden zur Frankiermaschine übermittelt, insbesondere bei Bedarf oder zusätzlich wenn ein dafür vorbestimmtes Zeitintervall durchlaufen wurde. Für den Frankiermaschinenbenutzer entsteht bei den bevorzugten Varianten Modem/Telefonnetz, ISDN oder GSM-Mobilfunknetz (Global System for Mobile Communications) keinerlei Aufwand oder längere Verzögerungen beim Betrieb der Frankiermaschine.

In der Systemroutine 200 wird erfindungsgemäß ein zusätzlicher Abfrageschritt 349 implementiert, in welchem das Erreichen eines Zeitintervall-Kriteriums abgefragt wird. War ein für eine Anzahl an Frankierungen vorbestimmtes Zeitintervall verbraucht, wird vom Schritt 349 automatisch zum Punkt g verzweigt. Nun wird in einen Kommunikationsmodus verzweigt, der eine Kommunikation mit der selben Datenzentrale ermöglicht, welche auch die Guthabennachladung gestattet. In einer alternativen Variante kann eine Kommunikation mit einer anderen Datenzentrale ermöglicht werden, welche die Dienstleistung Statistikmodusnachladung anbietet. Bei allen Varianten wird der vorgenannte Abfrageschritt 349 laut dem - in der Figur 2 dargestellten - Ablaufplan vom fünften Schritt 405 des Frankiermodus 400 bei fehlender Druckanforderung erreicht.

In der bevorzugten - in der Fig.2 gezeigten - Variante wird vom Abfrageschritt 349 in einen zweiten Kommunikationsmodus 350 verzweigt, damit von der Datenzentrale eine neue gültige vorbestimmte Anweisung übermittelt wird. Diese kann beispielsweise die Buchung der Werte z und p in vorgenannter Weise anweisen oder eine völlig andere Datenerfassung betreffen. Die Übermittlung solcher Anweisungen wird nachfolgend mit Statistikmodusnachladung bezeichnet. Anschließend wird wieder der Punkt t der Systemroutine 200 erreicht. Anderenfalls, wenn das Zeitintervall noch nicht verbraucht ist, wird vom Schritt 349 ebenfalls zum Punkt t der Systemroutine 200 verzweigt.

Alternativ ist in einer - nicht gezeigten - weiteren Variante eine Verzweigung zum ersten Kommunikationsmodus 1 statt zum zweiten Kommunikationsmodus II vorgesehen. Dabei wird in einem anstelle des Schrittes 350 tretenden Schrittes ein Flag F gesetzt und dann zum Punkt t der Systemroutine 200 verzweigt. Nach Durchlaufen der Eingabe/Anzeigeroutine 209 wird das vorgenannte Flag F im Abfrageschritt 301 als Transaktionsersuchen gewertet. Im Kommunikationsmodus 300 wird dann die Kommunikation mit der Datenzentrale mit einer Anzahl an Transaktionen durchgeführt. Hierbei ist die erste Transaktion eine sogenannte Null-Fernwertvorgabe, d.h. der Vorgabewunsch wird als Null gespeichert. Es wird somit kein Guthaben oder lediglich ein Guthaben mit dem Wert Null und die erwünschte Anweisung zur Datenerfassung nachgeladen.

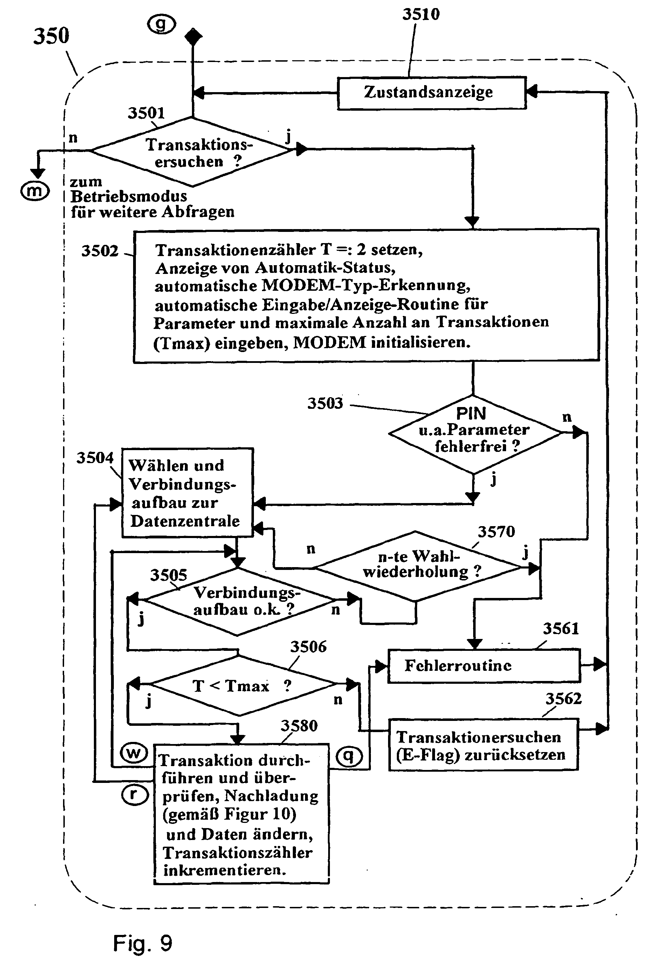

Der Unterschied des bevorzugten zweiten zum ersten Kommunikationsmodus 300 besteht in der Automatik bei der Übermittlung der Parameter zur Datenzentrale und und der geringeren Anzahl an Transaktionen während der Kommunikation im zweiten Kommunikationsmodus 350 aufgrund des Fehlens der ersten beiden Transaktionen für den Wertvorgabewunsch und den Vorgabewert. Der vorgenannten zweite Kommunikationsmodus 350 wird unten anhand des in der Figur 9 gezeigten Ablaufplanes erläutert, wobei der erste Kommunikationsmodus 300 ebensolche Schritte entsprechend zusätzlich aufweist, wenn eine Statistikmodusnachladung im Anschluß an eine Guthabennachladung aus derselben Datenzentrale erfolgen soll. Die Kommunikation im zweiten Kommunikationsmodus (II) 350 ist aber entsprechend separat gestaltet, um eben gerade zu verhindern, daß der bisherige Vorgabe-Wunsch überschrieben bzw. Null gesetzt wird. Da der bisherige Vorgabe-Wunsch beibehalten wird, kann nach einem Wechsel auf die reguläre Kommunikation im ersten Kommunikationsmodus 300 auf den unveränderten bisherigen Vorgabe-Wunsch zugegriffen werden. Somit entfällt dann in vorteilhafter Weise eine erneute manuelle Eingabe des Vorgabe-Wunsches für den Fall, daß dieser nicht geändert werden soll.

Der erste Kommunikationsmodus 300 wird weiter unten anhand des in der Figur 3 gezeigten Ablaufplanes erläutert. Im ersten Kommunikationsmodus 300 können Parameter manuell eingegeben werden, um beispielsweise ein Guthaben mit variabler Größe als Vorgabewert in der Frankiermaschine zu speichern. In einem auf den ersten Kommunikationsmodus 300 nachfolgenden - in der Fig.5 gezeigten - Schritt 211 können Transaktionsdaten hinsichtlich ihrer Übermittlung abgefragt werden. Erfindungsgemäß ist weiterhin vorgesehen, daß im Schritt 213 eine Statistikanweisungs- und Fehlerauswertung durchgeführt wird, um weitere aktuelle Daten zu gewinnen, welche nach Verzweigung zur Systemroutine 200 im Schritt 201 ebenfalls aufrufbar sind.

Im Falle, daß keine Eingaben getätigt und nicht kommuniziert oder Daten automatisch gewechselt wurden, werden im Frankiermodus 400 die - in Figur 2 gezeigten - Schritte 401 bis 404 durchlaufen. Bei einer vorbestimmten Anzahl an Durchläufen wird vom Schritt 404 auf den Schritt 408 verzweigt. Das oder ein alternatives Abfragekriterium kann im Schritt 404 abgefragt werden, um im Schritt 408 ein Standby-Flag zu setzen, wenn nach einer vorbestimmten Zeit noch keine Druckanforderung vorliegt. Wie bereits oben erläutert, kann das Standby-Flag im auf den Kommunikationsmodus 300 folgenden - in der Fig.5 gezeigten - Schritt 211 abgefragt werden. Damit wird nicht auf den Frankiermodus 400 verzweigt, bevor nicht die Checksummenprüfung die Vollzähligkeit aller oder mindestens ausgewählter Programme ergeben hat.

In der Figur 3 ist ein Ablaufplan für den ersten Kommunikationsmodus I gezeigt. Wird der Punkt e, d.h. der Beginn des nachfolgend erläuterten Kommunikationsmodus 300 erreicht, wird im Schritt 301 abgefragt, ob ein Transaktionsersuchen vorliegt. Ein solches kann beispielsweise zur Guthaben- und Stückzahl- bzw. zur Statistikmodusnachladung oder zur Aktualisierung anderer relevanter Daten in einem vorausgehenden Schritt gestellt bzw. festgestellt worden sein. Der Benutzer wählt beispielsweise zwecks Guthabennachladung den Kommunikationsmodus der Frankiermaschine über die Eingabe der achtstelligen Portoabruf IdentifikationsNummer (PIN) und über die Betätigung einer vorbestimmten Taste, beispielsweise T-Taste, an. Ist der gewünschte Eingabeparameter richtig angezeigt, wird dies durch erneutes Betätigen der vorgenannten oder einer zweiten vor-bestimmten Taste des Eingabemittels 2 bestätigt. Der Eingabeparameter wird bei Bedarf durch eine betätigte weitere X- oder R- oder C-Taste editiert (Schritt 302). In der Anzeigeeinheit 3 erscheint dann eine Darstel-lung entsprechend der Eingabe. Durch die Betätigung einer vorbestimm-ten Taste (T-Taste) wird die Übertragung des Eingabeparameters über MODEM-Verbindung gestartet und die Eingabe überprüft. Der weitere Vorgang läuft automatisch ab, wobei der Ablauf durch eine entsprechende Anzeige begleitet wird. Erfindungsgemäß wird im Schritt 302 vom Mikroprozessor 6 ein Transaktionenzähler T auf Null gesetzt und eine vorbestimmte maximale Anzahl an Transaktionen automatisch in ein Register zur Speicherung eingegeben, anhand derer die aktuell durchzuführende Transaktion (im Schritt 380) auch bei Unterbrechungen der Kommunikationsverbindung zur Datenzentrale oder das Beenden der letzten Transaktion (im Schritt 306) festgestellt werden kann. Im Schritt 302 kann vom Mikroprozessor 6 zusätzlich eine automatische Modem-Typerkennung durchgeführt werden, wie das in der deutschen Patentanmeldung DE 19543075 A1 mit dem Titel: Verfahren und Anordnung zur automatischen Modem-Typerkennung und Adaption, näher erläutert wird.

Dann prüft im Schritt 302 der Mikroprozessor 6 der Frankiermaschine, ob ein MODEM angeschlossen und betriebsbereit ist. Ist das nicht der Fall, wird zur Zustandsanzeige auf den Schritt 310 verzweigt, um anzuzeigen, daß das Transaktionsersuchen wiederholt werden muß. In einem Schritt 303 können die eingegebene PIN und andere eingegebene Parameter auf Fehlerfreiheit abschließend überprüft werden. Bei einem festgestelltem Fehler wird zur Zustandsanzeige auf den Schritt 310 verzweigt.

Anderenfalls liest die Frankiermaschine die Wahlparameter, bestehend aus den Herauswahlparametern (Haupt-/Nebenstelle, usw.) und der Telefonnummer aus einem NVRAM-Speicherbereich F und sendet diese mit einem Wahlaufforderungskommando an das Modem 23. Anschließend erfolgt ein entsprechendes automatisches Wählen und der für die Kommunikation erforderliche Verbindungsaufbau über das MODEM 23 mit der Datenzentrale im Schritt 304. Im Abfrageschritt 305 wird der ordnungsgemäße Verbindungsaufbau überprüft und dann zum Abfrageschritt 306 verzweigt, in welchem erfindungsgemäß vom Mikroprozessor 6 festgestellt wird, ob der Transaktionenzählerstand T kleiner als die vorbestimmte maximale Anzahl an Transaktionen ist. Ist das der Fall, wird auf den Schritt 380 verzweigt. Anderenfalls, wenn im Abfrageschritt 305 der Mikroprozessor 6 eine Unterbrechungen der Kommunikationsverbindung zur Datenzentrale feststellt, wird zum Abfrageschritt 370 verzweigt. Der Mikroprozessor 6 veranlaßt eine Wahlwiederholung und prüft im Abfrageschritt 370, ob bereits eine n-te Wahlwiederholung vorgenommen wurde. Ist das der Fall, d.h. nach einer vorbestimmten Anzahl n ergebnisloser Wahlwiederholungen zwecks Verbindungsaufbau wird über eine Fehlerroutine 361 und einen Anzeigeschritt 310 auf den Punkt e zurückverzweigt.

Anderenfalls wird nach Wahlwiederholung und erfolgreichen Verbindungsaufbau über das MODEM 23 zur Datenzentrale über den Abfrageschritt 305 bei ordnungsgemäßen Verbindungsaufbau über den Abfrageschritt 306 bei mindestens einer noch vorzunehmenden Transaktion zum Schritt 380 verzweigt. Anderenfalls, wenn vom Mikroprozessor 6 festgestellt wird, daß der Transaktionenzählerstand T nicht kleiner als die vorbestimmte maximale Anzahl an Transaktionen ist, werden keine weiteren Transaktionen erforderlich. In diesem Fall wird auf einen Schritt 362 zum Zurücksetzen des Transaktionsersuchens verweigt. In der Eingabe- und Anzeigeroutine 209 kann vorzugsweise ein E-Flag für ein Transaktionsersuchen gesetzt werden, welches im Schritt 301 erkannt wird. Ein Zurücksetzen des E-Flags im Schritt 362 führt nun nach Verzweigung über die Zustandsanzeige im Schritt 310 zur ergebnislosen Abfrage eines Transaktionsersuchens (E-Flags) im Schritt 301. Somit wird der Punkt b (Betriebsmodus für weitere Abfragen) erreicht.

Im Schritt 380 ist vorgesehen, daß eine während der Kommunikation mit verschlüsselten Meldungen durchgeführte Transaktion einen Vorgabewert für einen Guthabennachladewert umfaßt, welcher der entfernten Datenzentrale übermittelt wird und daß eine andere während der Kommunikation mit verschlüsselten Meldungen durchgeführte Transaktion entsprechende Daten für eine Statistikmodusnachladung umfaßt.

Für die Übermittlung der für eine Guthaben- und/oder Statistikmodusnachladung erforderlichen Daten sind relevante Schlüssel (Krypto-Keys) erforderlich, welche im Speicher in kryptifizierter Form abgelegt worden sind. Das Prinzip des Sicherungsmaßnahme geht auch aus der deutschen Patentanmeldung DE 19534530 A1 mit dem Titel: Verfahren zur Absicherung von Daten und Programmcode einer elektronischen Frankiermaschine hervor. Der DES-Algorithmus und ein geheimer Fernwertvorgabe-DES-Schlüssels $KK_{Fix}$ sind aus dem OTP nicht wieder auslesbar und somit durch einen potentiellen Manipulatomicht ausforschbar. Zur Absicherung des für die Fernwertvorgabe erforderlichen DES-Schlüssels $K_{Fix}$ vor Manipulation erfolgt eine Eingabeverschlüsselung mit dem geheimen Fernwertvorgabe-DES-Schlüssel $KK_{Fix}$ vor seiner Abspeicherung im NVRAM 5a als verschlüsselter Schlüssel Crypt $K_{Fix}$ Vorzugsweise erfolgt dabei eine Anwendung des DES-Algorithmus und auf die für die Fernwertvorgabe benötigten Schlüssel, um diese in kryptifizierter Form nichtflüchtig im NVRAM 5a ablegen zu können.

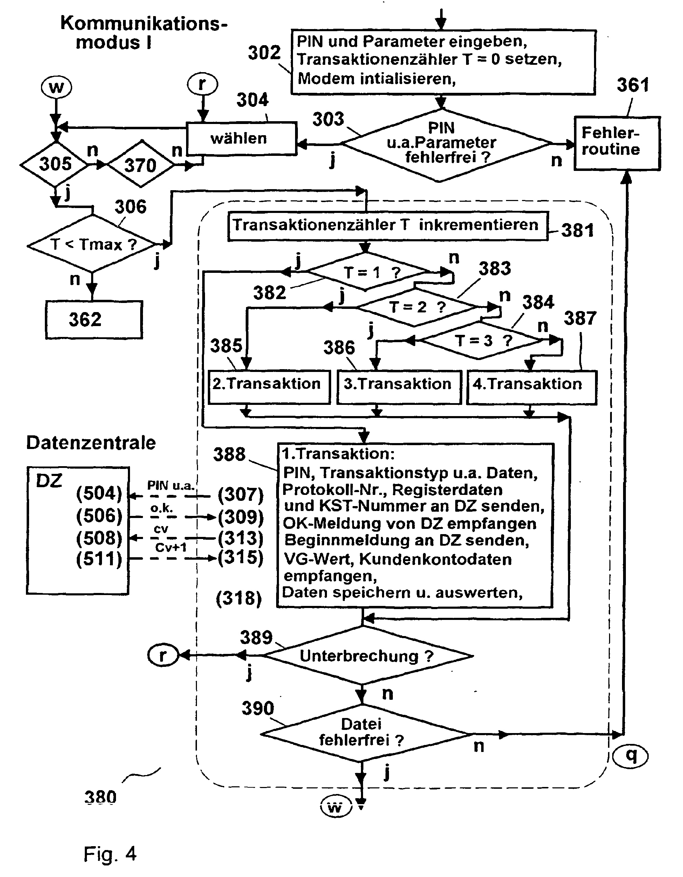

In den Figuren 4 und 5 werden weitere Details des ersten Kommunikationsmodus I dargestellt. Die Figur 4 erläutert den für die Kommunikation mit der Datenzentrale wesentlichen Schritt 380, der nach dem erfolgreichen Durchlaufen der Schritte 302 bis 306 erreicht wird, welche eine Transaktion vorbereiten. Der Transaktionenzähler wird im Schritt 381 um eins inkrementiert und ist T = 1. Im nachfolgenden Schritt 382 wird dieser Status festgestellt und auf einen Schritt 388 zur Durchführung der ersten Transaktion verzweigt.

Unter dem Titel: Verfahren zur Verbesserung der Sicherheit von Frankiermaschinen; sind in der DE 44 46 667 bereits die erforderlichen Schritte für zwei hintereinander ablaufende Transaktionen für einen speziellen Kommunikationmodus erläutert worden. Zur Durchführung der ersten Transaktion werden von der Frankiermaschine zur Datenzentrale neben der PIN und anderen Daten, erfindungsgemäß der Transaktionstyp gemäß des Standes des Transaktionenzählers unverschlüsselt übertragen (Schritt 307). Vorgenannte andere Daten liegen als Registereintrag gespeichert in der Frankiermaschine vor bzw. werden während der Eingabe- und Anzeigeroutine 209 eingegeben. Ein weiterer Registereintrag betrifft die Protokollnummer und ein anderer die erfindungsgemäß zu übertragene Anzahl an Transaktionen.

Die von der Frankiermaschine FM per Modem angewählte Datenzentrale DZ empfängt die Daten und überprüft die PIN (Schritt 504). Sie liest die Registereinträge, den Transaktionstyp und die Protokoll Nr. Ein Registereintrag betrifft eine Nachricht des FM-Benutzer an die Datenzentrale DZ. Vorzugsweise betrifft die Nachricht des FM-Benutzer an die Datenzentrale DZ den Wunsch nach einer vorbestimmten Dienstleistung. Entsprechend der Protokoll-Nr. kann die Datenzentrale ermitteln, ob die FM alten oder neuen Typs ist. Wunschgemäß wird nun eine Kommunikation mit einer Anzahl an Transaktionen durchgeführt. Die Datenzentrale sendet (Schritt 506) zunächst eine o.K.-Mitteilung an die Frankiermaschine. Nach dem Empfang in der Frankiermaschine (Schritt 309) werden die für die Fernwertvorgabe benötigten geheimen aktuellen Schlüssel KAct OTP-intern erzeugt und für die Transaktion im OTP-RAM zwischen-gespeichert. Die Erzeugung erfolgt mittels des vorgenannten geheimen Fernwertvorgabe-DES-Schlüssels $KK_{Fix}$, um die in kryptifizierter Form nichtflüchtig im NVRAM 5a ablegten Schlüssel zu einem geheimen aktuellen Schlüssel KAct zurückentschlüsseln zu können. Mit dem OTP-intern gespeicherten geheimen aktuellen Schlüssel KAct verschlüsselt die Frankiermaschine eine Nachricht v zu einer verschlüsselten Nachricht cv, wobei der DES-Algorithmus Anwendung findet. Nun wird die mit dem geheimen aktuellen Schlüssel KAct erzeugte verschlüsselte Nachricht cv von der Frankiermaschine zur Datenzentrale gesendet (Schritt 313).

Die Datenzentrale empfängt (Schritt 508) verschlüsselte Nachricht cv und bildet einen neuen geheimen Schlüssel. Die Datenzentrale bildet (Schritt 511) eine verschlüsselte Nachricht Cv+1 mit dem gleichen geheimen aktuellen Schlüssel KAct, wobei diese verschlüsselte Nachricht Cv+1 auch den neuen geheimen aktuellen Schlüssel und weitere Transaktionsdaten enthält, und sendet diese verschlüsselte Nachricht Cv+1 an die Frankiermaschine. Die Frankiermaschine empfängt (Schritt 315) und extrahiert aus der verschlüsselten Nachricht Cv+1 die PIN (Portoabruf Identifikations Nummer) und den neuen geheimen aktuellen Schlüssel, durch Entschlüsselung mit dem geheimen aktuellen Schlüssel KAct. Anhand der PIN ist eine Verifizierung der Nachricht möglich. Die Transaktionsdaten umfassen den Vorgabewert und Kundenkontodaten sowie Anweisungen für den Statistikmodus. Nach der Verifizierung der Nachricht erfolgt eine Speicherung (im Schritt 318) der Transaktionsdaten und des neuen geheimen aktuellen Schlüssels. Dabei wird letzterer wieder unter Anwendung des DES-Algorithmus und unter Anwendung des geheimen Fernwertvorgabe-DES-Schlüssels $KK_{Fix}$ aus dem OTP verschlüsselt, um auch den neuen geheimen aktuellen Schlüssel KAct+1 in kryptifizierter Form als crypto KAct+1 nichtflüchtig im NVRAM 5a ablegen zu können.

Während der ersten Transaktion (Schritt 388) wird eine - nicht gezeigte-Überprüfung auf Unterbrechung der Kommunikationsverbindung und eine - nicht gezeigte - Überprüfung auf fehlerfreie Daten durchgeführt. Das Ergebnis der Überprüfungen wird anschließend an den ersten Transaktionsschritt 388 in separaten Abfrageschritten 389 und 390 abgefragt. Die Überprüfung auf fehlerfreie Daten kann so durchgeführt werden, wie das bereits unter dem Titel: Verfahren zur Verbesserung der Sicherheit von Frankiermaschinen; in der DE 44 46 667 beschrieben worden ist.

Es erfolgt eine Verzweigung auf den Punkt r, wenn im Abfrageschritt 389 eine Unterbrechung der Kommunikationsverbindung zur Datenzentrale festgestellt wird. Vom Abfrageschritt 389 wird zur Durchführung von Wahlwiederholungen zwecks Verbindungsaufbau zum Schritt 304 zurückverzweigt.

Es erfolgt eine Verzweigung auf den Punkt q, wenn im Abfrageschritt 390 bei der Überprüfung fehlerbehaftete Daten festgestellt werden. Anschließend findet eine Analyse des Fehlers in einer Fehlerroutine (Schritt 361) statt bevor zur Zustandsanzeige 310 verzweigt wird (Fig.3).

Anderenfalls, wenn die erste Transaktion erfolgreich durchgeführt werden konnte (Punkt w) wird vor Durchführung von weiteren Transaktion zunächst wieder auf den Schritt 305 verzweigt, um Aufrechterhaltung der Kommunikationsverbindung zur Datenzentrale zu prüfen. Ist diese in Ordnung, wird über den Abfrageschritt 306 wieder auf den Schritt 380 verzweigt. Wieder wird der Transaktionenzählerim Schritt 381 um eins inkrementiert und ist T = 2. Im nachfolgenden Schritt 382 wird festgestellt daß der Status nicht T = 1 ist und zum Schritt 383 verzweigt, in dem festgestellt wird, daß der Status T = 2 ist. Anschließend wird auf einen Schritt 385 zur Durchführung der zweiten Transaktion verzweigt.

In der Figur 5 sind die Details des ersten Kommunikationsmodus 300 für weitere drei Transaktionen gezeigt. Mit dem neuen geheimen aktuellen Schlüssel KAct+1 wird die zweite Transaktion (Schritt 385) durchgeführt, welche prinzipiell ebenso wie die erste Transaktion abläuft und zur Bestätigung des Vorgabewertes führt. Erst dann ist die Guthabennachladung abgeschlossen. Die - in der Figur 5 nicht näher erläuterten - Schritte 607, 608, 613, 615 und 618, die in der Frankiermaschine ablaufen, sowie die - in der Figur 5 nicht näher erläuterten - Schritte 704, 706, 708 und 711, die in der Datenzentrale ablaufen, werden im wesentlichen so durchgeführt, wie das bereits unter dem Titel: Verfahren zur Verbesserung der Sicherheit von Frankiermaschinen, in der DE 44 46 667 beschrieben worden ist. Das gilt prinzipiell auch für die Schritte der erfindungegemäßen weiteren Transaktionen.

Erfindungsgemäß sind weitere Transaktionen vorgesehen, um Daten des Statistikmodus, um Statistikanweisungsdaten zu übertragen bzw. um die alte Statistik zu löschen. Für jede Transaktion existiert ein geheimer aktueller Schlüssel, welcher bei der vorhergehenden Transaktion von der Datenzentrale zur Frankiermaschine übermittelt wurde. Im Unterschied zur bekannten Guthabennachladung sind nun vier Transaktionen im ersten Kommunikationsmodus 300 bzw. zwei Transaktionen im erfindungsgemäßen zweiten Kommunikationsmodus 350 vorgesehen, die wie die beiden letzten Transaktionen des ersten Kommunikationsmodus 300 ablaufen. Diese beiden erfindungsgemäßen Transaktionen sollen anhand der Subschritte des zweiten Kommunikationsmodus II (Schritt 350) näher erläutert werden, der in der Figur 9 dargestellt ist. Im zweiten Kommunikationsmodus II entfallen die erste und zweite Transaktion. Im Unterschied zum Subschritt 302 zum Schritt 300 des ersten Kommunikationsmodus I (Fig.3) wird im Subschritt 3502 automatisch der Transaktionenzähler auf T = 2 gesetzt und als maximale Anzahl vier Transaktionen eingegeben. Es ist weiterhin möglich, daß zwecks Wählens und Verbindungsaufbaues zu einer anderen Datenzentrale im Subschritt 3504 auf eine entsprechend andere Telefonnummer zugegriffen wird. Die übrigen Schritte entsprechen in der Mehrheit den Schritten, die in Zusammenhang mit der Figur 3 bereits erläutert wurden.

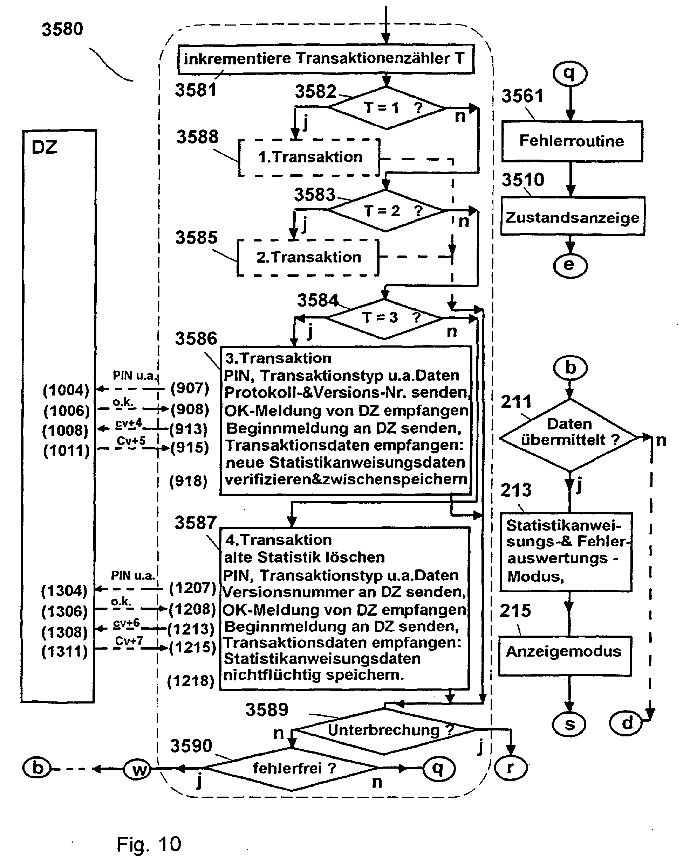

In der Figur 10 werden Details von den zwei weiteren Transaktionen näher dargestellt. Der Prozessor der Frankiermaschine überspringt die erste und zweite Transaktion und beginnt wegen der vorgenommenen Voreinstellung mit der dritten Transaktion (Schritt 3586). Im Subschritt 907 wird u.a. auch die Versionsnummer NR der gespeicherten Statistikanweisungen von der Frankiermaschine zur Datenzentrale übermittelt. Die Datenzentrale sendet eine o.K.-Meldung und erzeugt dann Anweisungsdatensätze u.a. in der - in der Figur 11 gezeigten - Form zur Übermittlung an die Frankiermaschine. Im Subschritt 915 werden von der Frankiermaschine Transaktionsdaten empfangen, welche die neuen Statistikanweisungsdaten einschließen. Diese werden verifiziert und im Arbeitsspeicher RAM zwischengespeichert. Die Schritte der dritten Transaktion (Schritt 3586) im zweiten Kommunikationsmodus II und die der dritten Transaktion (Schritt 386) im ersten Kommunikationsmodus I laufen prinzipiell gleich ab.

Nach der dritten Transaktion (Schritt 3586), während der auch eine Überprüfung auf Fehlerfreiheit der übermittelten Daten in der bereits oben beschriebenen Weise stattfindet, werden wieder ein Abfrageschritt 3589 und ein Abfrageschritt 3590 erreicht, welche prinzipiell den Abfrageschritten 389 und 390 (Fig.4) des ersten Kommunikationsmodus I entsprechen. Auch die - in den Figuren 5 und 10 erwähnten, aber nicht näher erläuterten - Schritte 1004, 1006, 1008 und 1011, die in der Datenzentrale ablaufen, werden in ähnlicher Weise durchgeführt, wie das bereits für vorherige Transaktionen erläutert worden ist. Ebenfalls in für die Figuren 5 und 10 vergleichbaren Weise laufen die Schritte 1207, 1208, 1213, 1215, 1218 in der Frankiermaschine und die zugehörigen Schritte 1304, 1306, 1308, 1301 in der Datenzentrale ab. Im Subschritt 1207 wird u.a. auch die Versionsnummer NR der inzwischen zwischengespeicherten neuen Statistikanweisungen von der Frankiermaschine zur Datenzentrale zu Kontroiizwecken übermittelt im Subschritt 1215 werden von der Frankiermaschine Transaktionsdaten zur Bestätigung empfangen, daß die neuen Statistikanweisungsdaten nunmehr nichtflüchtig im Bereiche 16-03 des Kostenspeichers 16 gespeichert werden können.

Die Frankiermaschine enthält einen Mikroprozessor, welcher zur Bildung einer Prüfsumme programmiert ist, welche zur Datenzentrale übermittelt wird, zwecks Überprüfung der seitens der Frankiermaschine empfangenen übertragenen neuen Statistikanweisungsdaten. Es ist weiterhin vorgesehen, daß das Löschen der alten Statistikanweisungsdaten nach einer Überprüfung der übertragenen neuen Statistikanweisungsdaten zum Bilden eines neuen Statistikmodus vom Mikroprozessor der Frankiermaschine durchgeführt wird, wobei die Überprüfung verbunden ist,

- mit flüchtiger Zwischenspeicherung der übertragenen neuen Statistikanweisungsdaten und einem Bilden einer Prüfsumme über deren Inhalt,
- mit einem Übertragen eines gebildeten Prüfsummenwertes zur Datenzentrale während einer weiteren Transaktion und
- mit einem Vergleich des übermittelten Prüfsummenwertes mit einem vorbestimmten Prüfsummenwert für die übertragenen neuen Statistikanweisungsdaten in der Datenzentrale sowie
- mit einer Übermittlung des Ergebnisses des Vergleiches zur Frankiermaschine während der weiteren Transaktion im Kommunikationsmodus (300) bzw. (350) und mit einer Durchführung einer nichtflüchtigen Speicherung übertragenen neuen Statistikanweisungsdaten in einem Speicher (5a, 5b, 16) der Frankiermaschine bei in der Datenzentrale festgestellter Gleichheit oder anderernfalls mit einer Fehlermeldung bei Ungleichheit.

Die flüchtige Zwischenspeicherung erfolgt in der Frankiermaschine nur bei ordnungsgemäßer Übertragung, d.h. nur dann, wenn die betreffende vorbestimmte Frankiermaschine die Anweisungsdaten fehlerfrei empfangen hat. Mit Sicht auf die in den Figuren 5 oder 10 gezeigten Schritte ist vorgesehen, daß in einem Schritt 918 die flüchtige Zwischenspeicherung der übertragenen neuen Statistikanweisungsdaten in Abhängigkeit von einer übermittelten PIN nur erfolgt, wenn im Schritt 915 von der Frankiermaschine eine verschlüsselte Nachricht empfangen wird, welche die neuen Statistikanweisungsdaten und die PIN der Frankiermaschine enthält, wenn dann von der Frankiermaschine die verschlüsselte Nachricht entschlüsselt und die PiN separiert und überprüft wird sowie wenn die PIN im Ergebnis als zutreffend bewertet wird.

Anschließend wird noch eine Überprüfung einer Prüfsumme in der Datenzentrale durchgeführt, bevor die in der Frankiermaschine zwischengespeicherten Anweisungsdaten als gültig anerkannt werden. Die Frankiermaschine sendet die Versionsnummer und eine Prüfsumme an die Datenzentrale, welche in der Datenzentrale gestatten, die übertragenen neuen Statistikanweisungsdaten eindeutig zu identifizieren.

Bei einer RSA-Signatur (R.Rivest, A.Shamir, L.Adleman) zu der beispielsweise der Digital Signatur Algorithmus (DSA) nach US 5,231,668 gehört wird eine auf der Versionsnummer und der Prüfsumme basierende Nachricht mit einem Schreibschlüssel zu einer digitalen Unterschrift verschlüsselt. Die digitale Unterschrift wird zur Datenzentrale gesendet, welche mit einem Leseschlüssel die digitale Unterschrift entschlüsseln kann. Die Prüfsumme über den Inhalt der Anweisungsdaten muß mit der entschlüsselten Nachricht übereinstimmen, wenn die in der Frankiermaschine zwischengespeicherten Anweisungsdaten als gültig anerkannt werden sollen, um einen entsprechenden Befehl zur Frankiermaschine zu übermitteln.

Die Überprüfung in der Datenzentrale kann alternativ auch mittels MAC (Message Authentication Code) erfolgen. Bei einer MAC-Bildung (Message Authentication Code) wird in der Datenzentrale und der Frankiermaschine der gleiche geheime Schlüssel verwendet.

Der Mikroprozessor der Frankiermaschine ist beispielsweise ein OTP-Typ, der in seinem internen Programmspeicher OTP-ROM den Algorithmus zur Bildung einer Prüfsumme und zu deren Verschlüsselung gespeichert enthält. Er ist programmiert, so daß das Bilden einer Prüfsumme im OTP-Prozessor über den Inhalt der übertragenen neuen Statistikanweisungsdaten, eine Verschlüsselung der Prüfsumme zu einer verschlüsselten Nachricht und eine flüchtige Zwischenspeicherung im internen Arbeitsspeichers OTP-RAM des vorgenannten OTP-Prozessors erfolgt, bevor die verschlüsselte Nachricht mit dem intern gebildeten Prüfsummenwert zur Datenzentrale im Schritt 1207 während einer weiteren Transaktion übertragen wird.

Es ist vorgesehen, daß die Datenzentrale die verschlüsselte Nachricht entschlüsselt und den Prüfsummenwert abtrennt und überprüft sowie daß bei in der Datenzentrale festgestellter Gleichheit mit einem vorbestimmten Prüfsummenwert, nach Übermittlung des Vergleichsergebnisses zur Frankiermaschine im Schritt 1215 der weiteren Transaktion, die nichtflüchtige Speicherung der übertragenen neuen Statistikanweisungsdaten in einem Speicher 5a, 5b, 16 der Frankiermaschine vom vorgenannten OTP-Prozessors im Schritt 1218 durchgeführt wird.

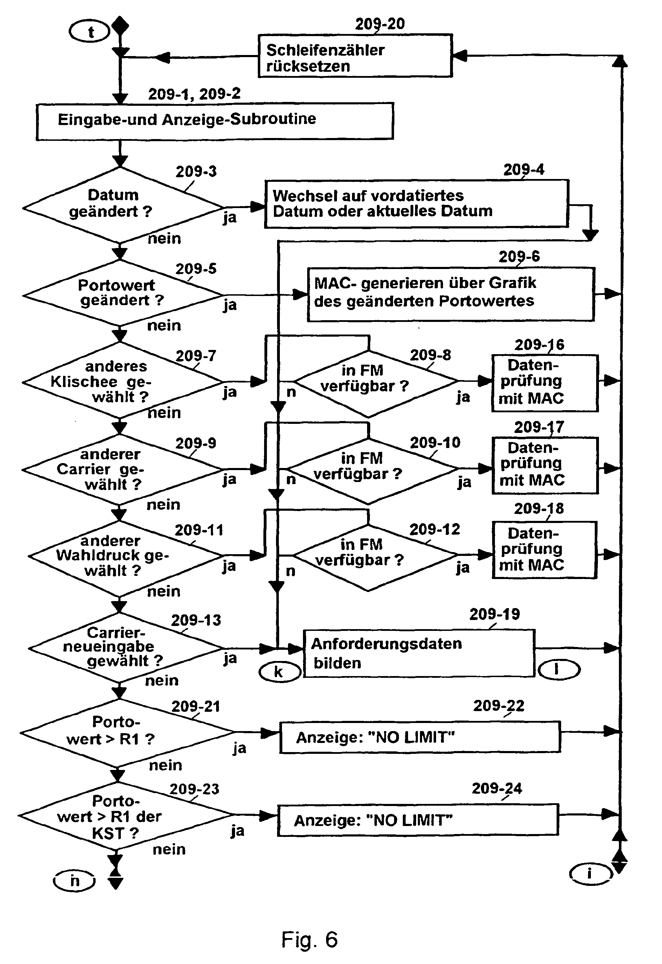

Die Figur 6 zeigt einen Ablaufplan mit Absicherung von sicherheitsrelevanten Daten in einem frei zugänglichen Speicher bei einer elektronischen Frankiermaschine. Im Schritt 209-1 erfolgt eine Eingabe zur Veränderung von Fensterdaten. Die Eingabe wird im Schritt 209-2 angezeigt und dann auf einen ersten Prüfschritt 209-3 aus einer Anzahl Prüfschritten 209-3 bis 209-12 verzweigt. Im externen Programmspeicher (EPROM) befinden sich beispielsweise auch Druckdaten des Wertstempels und andere Daten, wie beispielsweise Ort des Absenders, Postleitzahl des Absenders usw., die vor Manipulation geschützt werden sollen. Das wurde schon in der deutschen Patentanmeldung DE 19534530 A1, mit dem Titel: Verfahren zur Absicherung von Daten und Programmcode einer elektronischen Frankiermaschine, bereits näher erläutert.

Die Prüfschritte erlauben eine Verzweigung auf jeweils einen der Schritte 209-4 bis 209-11, falls bei der Eingabe ein anderer Wert, Wahldruck (Dienste), Klischee oder andere Daten ausgewählt wurden. Dann wird der MAC über den zuprüfenden Inhalt in Bereichen des EPROMs gebildet und mit den zugehörig gespeicherten MAC verglichen (Schritte 209-16 bis 209-18). Anschließend wird über einen Schritt 209-20 zur Rücksetzung des Schleifenzählers auf den Schritt 209-1 zurückverzweigt. Wenn zugehörige Daten für einen Postbeförderer (Carrier) in der Frankiermaschine nicht verfügbar sind, wird das in Abfrageschritten (Subschritte 209-8, 209-10, 209-12) festgestellt und auf einen Punkt k verzweigt, um automatisch Anforderungsdaten zu bilden. Bei der Bildung von Anforderungsdaten kann beispielsweise bei einer angeschlossenen Waage prinzipiell so vorgegangen werden, wie das im EP 724 141 A1 (Verfahren zur Dateneingabe in eine Waage, im Schritt 126 in der Fig. 12) bereits näher dargestellt wurde. Die Anforderungsdaten werden in einem Register gespeichert, um sie später bei einer Kommunikation an die Datenzentrale senden zu können. Nach der Bildung von Anforderungsdaten (Punkt l) wird über den Subschritt 209-20 wieder der Punkt t der Systemroutine erreicht. In Subschritten 209-1, 209-2 erfolgt wieder eine Tastaturabfrage und Anzeige. Sind alle folgenden Prüfschritte 209-3 bis 209-13 ohne Änderung bzw. Auswahl eines neuen Wertes bzw. Daten durchlaufen worden, dann wird ein weiterer Abfrageschritt 209-21 erreicht, um zu prüfen, ob der zu druckende Portowert größer ist, als das in der Frankiermaschine gespeicherte Restguthaben. In diesem Fall besteht keine ausreichende Deckung und somit kann keine Frankierung erfolgen, was im Subschritt 209-22 mit der Anzeige "NO LIMIT" angezeigt wird. Anderenfalls wird ein weiterer Abfrageschritt 209-23 erreicht, um zu prüfen, ob der zu druckende Portowert größer ist, als das in der Frankiermaschine für eine ausgewählte Kostenstelle speziell gespeicherte Restguthaben. In diesem Fall besteht ebenfalls keine ausreichende Deckung und somit kann keine Frankierung erfolgen, was im Subschritt 209-24 mit der Anzeige "NO LIMIT" oder mit einer speziellen Anzeige angezeigt wird. Nach dem Durchlaufen aller Abfrageschritte im Schritt 209 wird wieder der Punkt e erreicht.

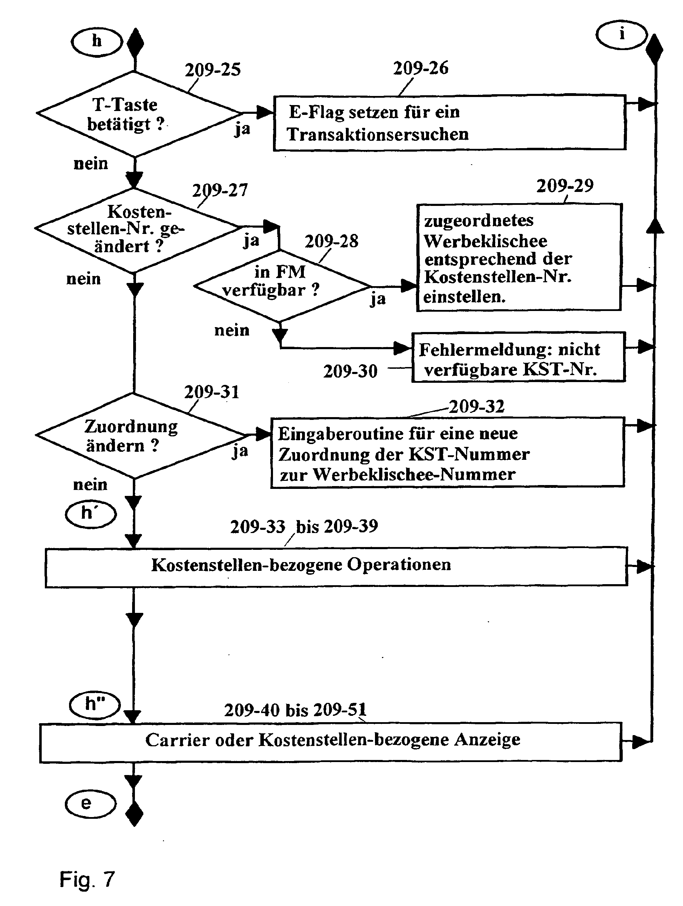

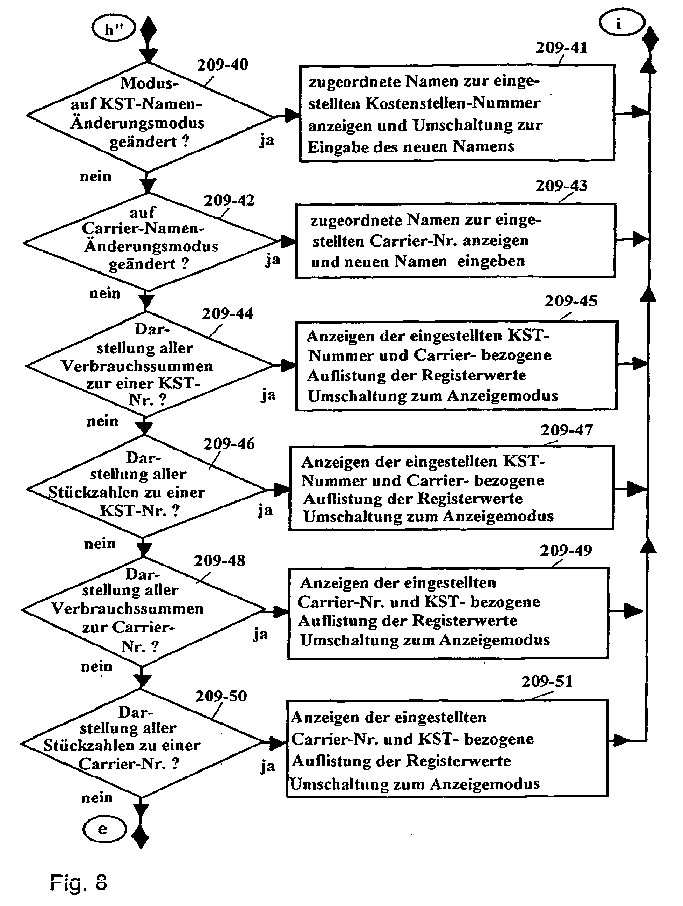

Die Figuren 7 und 8 zeigen weitere Details der Eingabe- und Anzeigeroutine mit Abfragen nach geänderten Eingabedaten und entsprechender Datenverarbeitung bzw. Anzeige. Die Figur 7 zeigt einen Tastaturabfrageschritt 209-25 mit Verzweigung zum Setzen eines E-Flags (im Subschritt 209-26) für ein Transaktionsersuchen durch den Benutzer der Frankiermaschine. Ein weiterer Abfrageschritt 209-27 betrifft eine Tastaturabfrage nach Eingabe bzw. einer entsprechenden Tastenbetätigung für das Wechseln der Kostenstellen-Nummer. In diesem Falle soll die Abrechnung und Frankierung spezifisch für die selektierte Kostenstelle erfolgen. Zunächst wird jedoch geprüft, ob die selektierte Kostenstellen-Nummer in der Frankiermaschine verfügbar ist (Subschritt 209-28). Bei Verfügbarkeit wird im Subschritt 209-29 ein zugeordnetes Werbeklischee entsprechend der Kostenstellen-Nummer automatisch in die Frankiermaschine eingegeben. Anderenfalls erfolgt eine Fehlermeldung (Subschritt 209-30).

Ein weiterer Abfrageschritt 209-31 betrifft eine Tastaturabfrage nach Eingabe bzw. einer entsprechenden Tastenbetätigung für das Wechseln Zuordnung der Kostenstellen-Nummer zur Werbeklischeenummer. Die Zuordnung erfolgt dann in einer folgenden Eingaberoutine im Subschritt 209-32. Das vorgenannte Abfragen ist auch erforderlich, wenn die Kostenstelle mit Ihrer wahren Bezeichnung eingegeben (Subschritte 209-40, 209--41 in Fig. 8) werden soll, statt über eine zugeordnete Nummer.

Bei den - in den Figuren 5 und 10 erläuterten - Schritten, werden im Verlaufe von Transaktionen von der Datenzentrale jeweils immer die von Frankiermaschine zu Frankiermaschine unterschiedliche Portoabruf-Identifizierungs-Nummer (PIN), der Transaktionstyp und die interessierenden Daten abgerufen, bevor von der Datenzentrale neue Transaktionsdaten zur Frankiermaschine gesendet und dort empfangen werden. Zur Datenzentrale werden nur Daten übertragen, deren Typ und Form der Erfassung festgelegt sind, und es werden zusätzliche Daten übertragen, welche schon bei einer früheren Kommunikation vorausgewählt bzw. vorbestimmt worden waren. Die Vorauswahl bzw. Bestimmung der Bedingungen erfolgt durch mindestens einen ersten Parameter.

Die Frankiermaschine FM kann bei einem solchen Abruf, vorzugsweise vor einer Guthabennachladung, der Datenzentrale DZ Registerwerte Ri (mit i = 1, 2, 3, ... ,) übermitteln:

R1 (descending register) vorrätige Restbetrag in der Frankiermaschine,
R2 (ascending register) Verbrauchssummenbetrag in der Frankiermaschine,
R3 (total resetting) die bisherige Gesamtvorgabesumme aller Fernwertvorgaben, mit R3 = R2 + R1,
R4 (piece count $\Sigma$printing with value $\neq$ O) Anzahl gültiger Drucke.

Eine Anzahl weiterer vorausgewählt angeforderter Datensätze kann sich anschließen, und umfaßt beispielsweise:

R41.00 (piece count Eprinting with value =1.00 EURO) Anzahl an Postwerten,
R42.00 (piece count $\Sigma$printing with value =2.00 EURO) Anzahl an Postwerten,
...-...
R4p.pp (piece count $\Sigma$printing with value =p.pp EURO) Anzahl an Postwerten,
usw. bis beispielsweise:
R8 (R4 + piece count $\Sigma$printing with value =O) Anzahl aller Drucke.

Diese oben genannten und jeder weitere Datensatz werden durch einen weiteren separaten Parameter vorbestimmt. Ein Stückzahlwert z zugeordnet zu einem bestimmten Portowert p.pp läßt sich erforderlichenfalls auch noch weiterer detailiert nach Beförderernummer CINyyy und Kostenstellennummer KSTvvv als weiterer detailierter Wert in einem Register R4pppCINyyyKSTvvv abspeichern.

Bei jeder Fernwertvorgabe läßt sich erfindungsgemäß nun beispielsweise auch ein Stückzahlwert z zugeordnet zu einem bestimmten Portowert p.pp abfragen und gegebenenfalls den unter einer Beförderernummer CINyyy und Kostenstellennummer KSTvvv matrixartig abspeicherten Wert R4p.ppCINyyyKSTvvv abfragen. Die Datenzentrale DZ und/oder der Postbeförderer können diese Daten statistisch auswerten.

Eine Statistikklasse kann jedoch ebenfalls als eine Menge definiert werden, wobei dann deren Eigenschaften mittels mindestens einer Parameterart und mittels einer Beschreibung der Grenzen der Menge und gegebenenfalls die Verknüpfung von Mengen definiert werden müssen. Die Glaubwürdigkeit der in solchen Statistikklassen erfaßten Stückzahlen muß dann in der Datenzentrale im Rahmen einer Plausibilitätsprüfung erfolgen, welche entsprechend der Mengenbildung modifiziert auszuführen ist. Bei unglaubwürdigen Stückzahlen, kann eine Überprüfung der Frankiermaschine vor Ort angeordnet werden.

Eine jede Frankierung kann in nur einem Register zur zugehörigen vorbestimmten Statistikklasse oder aber auch in mehreren Registern zu unterschiedlichen bestimmten Statistikklassen gezählt werden. Die Bedingungen dafür legt die lokale Behörde bzw. der Postbeförderer fest, d.h. derjenige, für welchen die Statistikdaten in der Frankiermaschine FM aufgezeichnet werden.

Die Datenzentrale DZ erzeugt für die Frankiermaschine entsprechende Anweisungen einer in der Figur 11 gezeigten Form. Die Anweisungen umfassen einen Header und eine Anzahl an Anweisungsdatensätzen, welche jeweils eine Erfassung von Statistikklassendaten für ein Register definieren. Optional erfolgt ein Abschluß mit einer Checksumme oder einer verschlüsselten Checksumme (MAC). Diese Anweisungen werden bei einer im Schritt 386 bzw. 3586 (Fig. 5, 10) ausgeführten Transaktion zur Frankiermaschine übermittelt (Absenden von DZ im Schritt 1008). Nach Empfang der neuen Statistikanweisungsdaten (im Schritt 915) kann die Authentizität der Anweisungen sofort vom Prozessor der Frankiermaschine FM überprüft werden und dann ggf. zur Fehlererfassung im Schritt 213 genauer ausgewertet werden oder er legt diese Anweisungen in geeigneter Form in einem nichtflüchtigen Speicher ab und organisiert den Speicher entsprechend.

Nach oder bei Durchführung einer Frankierung wertet die Frankiermaschine FM die Anweisungsdatensätze aus, wobei die Anweisungen interpretiert werden, und aktualisiert die gewünschte FM-interne Statistik in den dafür vorbestimmten Registern entsprechend. Es versteht sich von selbst, daß der Statistikmodus vom Prozessor entsprechend modifiziert, innerhalb des Frankiermodus abläuft (Fig.2). Bei jeder Frankierung bzw. jedem Drucken oder Dienstleistung, welche mit der Maschine ausgeführt wird, wird somit prinzipiell eine statistische Erfassung von Benutzungsdaten möglich, wenn eine solche Erfassung mittels der o.g. Parameter vorher vereinbart worden war. Die Vereinbarung für eine solche Erfassung wird nachfolgend auch als Statistikdefinition bezeichnet. Die Statistikdefinition kann erfindungsgemäß eine Vorverdichtung erfaßter Daten enthalten. Eine Statistikdefinition ergibt sich einerseits aus den oben genannten Anweisungen und andererseits aus einem im Programmspeicher gespeicherten Programm, welches die Anweisungen interpretiert. Das Programm selbst kann nicht manipuliert, oder im Rahmen einer Kommunikation verändert werden. Im vorgenannten Programm sind außerdem befördererspezifische Bedingungen gespeichert, welche in der Frankiermaschine abgefragt werden. Sind diese Bedingungen erfüllt, ruft die Frankiermaschine bei der Datenzentrale an und stellt eine Kommunikationsverbindung her.

Bei Anruf der Datenzentrale DZ kann die Frankiermaschine FM von der Datenzentrale DZ aufgefordert werden,

- die erfaßten, ggf. vorverdichtet gespeicherten Daten zur zentralen Weiterverarbeitung zu übermitteln;
- die Datenwerte im FM-Statistikregister auf Null zu setzen,
- die Statistikdefinition zu Kontrollzwecken zu übermitteln,
- die Statistikdefinition zu löschen und ggf.
- eine neue Statistikdefinition zu speichern, um künftig nach dieser zu verfahren.

Die FM-Statistikregister können auch über die Abfrage hinaus weiter kumuliert werden, ohne die Datenwerte im FM-Statistikregister auf Null zu setzen. Wenn ausgehend von einer vorher ermittelten Stückzahl $\Sigma Z'$ beispielsweise ein Stückzahlwert z zugeordnet zu einem bestimmten Postwert p.pp immer nur zum Stückzahlwert $\Sigma z$ inkrementiert wird, kann die Datenzentrale DZ dann an bestimmten Stichtagen oder bei Bedarf die Differenz der Stückzahlwerte ermitteln. Die Datenzentrale muß dafür natürlich auch die vorherigen Daten in ihrer Datenbank speichern.

Der dabei durch Subtraktion zu dem beim vorherigen Anruf ermittelte Stückzahlwert $z = \Sigma z - Ez'$ ergibt den Zuwachs. Natürlich ist auch ein Nullsetzen der Werte nach jeder Abfrage möglich, wobei sich $z = \Sigma z - 0$ ergibt. Die Datenzentrale DZ lagert die gelesenen Werte (Statistikdaten) zur weiteren Verwendung frankiermaschinenbezogen oder kundenbezogen in der Datenbank. Hier sind auch die zugehörigen alten und neuen Statistikanweisungsdaten für die Frankiermaschine gespeichert.

Ein berechtigter externer Rechner kann sich nun, beispielsweise an Stichtagen, die Auszüge holen und nach Belieben weiterverarbeiten. Er kann weiterhin der Datenzentrale DZ neue Vorgaben für eine zukünftig geänderte Vorverdichtungen oder statistische Erfassung machen.

Die vereinbarte Statistikdefinition umfaßt Anweisungen für eine beliebige Anzahl an Parameterklassen und ggf. deren logische Verknüpfung. Somit sind auch spezifische Statistiken erstellbar. Hinzu kommen einige Funktionen zum Fehlerhandling und zur weiteren Verallgemeinerung, beispielsweise eine Aufteilung des zur Verfügung stehenden Speicherplatzes. Letzteres ist wichtig, wenn eine Frankiermaschine FM mehrere Postbeförderer bedient. Es ist vorgesehen, daß in einem solchen Fall die verfügbaren Systemressourcen dynamisch durch die hardware- und/oder softwarebasierende Automatik aufgeteilt werden. Solche hinzukommenden Anweisungsdatensätze, insbesondere zur Aufteilung, wurden in der Fig.11 der Einfachheit halber nicht eingezeichnet.

Die Datenzentrale ist in der kompatiblen höchsten Ausbaustufe nach dem erfindungsgemäßen Verfahren in der Lage, flexibel auf bestimmte individuelle Eigenheiten jeder Frankiermaschine FM einzugehen. Alle nur denkbaren, im Zusammenhang mit der Frankiermaschine erbringbare, Dienstleistungen sind in der Frankiermaschine in Form einer Auflistung von Codes - was hier im Beispiel mit den Bezeichnungen (C, D, G, P, K, W) verdeutlicht wird - entsprechend nach Parameterarten gespeichert.

Es ist weiterhin vorgesehen, in Zusammenhang mit den mittels Frankiermaschinen ausgeführten Dienstleistungen, zusätzlich erbrachte Dienstleistungen auf indirekte Art und Weise auszuwerten. Das Protokoll und das Verfahren wurden so ausgelegt, daß eine Übermittlung einer geänderten Statistikanweisung für den Fall erfolgt, daß eine Abfrage der Datenbank beispielsweise ergibt, daß eine Frankiermaschine bestimmte Wahldrucke, beispielsweise "Drucksache..", nicht erfassen kann, weil sie solche in ihren Speichern nicht beinhaltet bzw. gar nicht drucken kann. Dies würde bedeuten, daß entsprechende Statistikinformationen unsicher wären, wenn man einen solchen Tatbestand nicht berücksichtigen würde. Für einen solchen Fall ist vorgesehen, dieser Maschine eine alternative Vorverdichtungsvorschrift zu übermitteln oder in der Datenbank für eine übergreifende Auswertung die entsprechenden Daten als unsicher zu kennzeichnen oder zu eliminieren. Initiator für die Festlegung der Datenvorverdichtung ist immer die Datenzentrale bzw. eine dahinter liegende übergeordnete Instanz, die die Datenerfassungs- und Verwaltungswünsche nach Statistikdetails in die entsprechende an die Frankiermaschine zu übermittelnde Vorverdichtungsvorschrift umsetzt. Dadurch kann jederzeit flexibel auf geänderte Verwaltungswünsche einer übergeordneten Instanzes reagiert werden, ohne Hilfe durch einen ServiceTechniker bzw. durch den Frankiermaschinenbenutzer selbst.

Weitere Vorteile liegen auf der Hand. Es ist mehr als schwierig, eine von der Datenzentrale in solcher Weise überwachte Maschine in Fälschungsabsicht zu manipulieren. Ein potentieller Manipulator kann sich nicht schnell und schon gar nicht ohne erhebliche Kosten auf geänderte Datenerfassungs- und Verwaltungswünsche nach Statistikdetails umstellen. Somit sind Betrugsversuche zukünftig kein lohnendes Geschäft mehr. Die folgenden aufgelisteten grundsätzlichen Elemente, die vorzugsweise in der Vorverdichtungs-Beschreibungssprache enthalten sind, betreffen neben einem Header die Datensätze:

| DATENSATZ | DEFINITION |
|---|---|
| **Header** | Befehlskennung, Versionsnummer, Zahl der Beschreibungssätze "Regdef", Länge, etc. |
| **Regdef1** | Datensatz zur Definition des ersten Registers |
| **Regdef2** | Datensatz zur Definition des zweiten Registers |
| **Regdef2** | Datensatz zur Definition des dritten Registers |
| .. | |
| **Regdefn** | Datensatz zur Definition des n-ten Registers |
| **BCC** | Checksumme |

Ein so strukturierter erster und zweiter Datensatz **Regdef1** und **Regdef2** zur Definition des ersten und zweiten Registers bewirkt beim Frankieren mit statistischer Auswertung nach einer Minimalversion in diesem Beispiel zwei Einträge, nämlich die Stückzahl der Frankierungen und die Wertsumme. Der kummulierte Portoverbrauch entspricht dabei der Wertsumme $\Sigma P1$, die sich ergibt, aus der Multiplikation von Stückzahlwert $z$ mit dem zugeordnetem bestimmten Postwert 1.pp. Der Eintrag für die beiden Statistikklassen erfolgt gemäß obiger Anweisung in die Register R41.pp für die Stückzahl und Register R2 für den Portoverbrauch. Die Register sind Bestandteil des nichtflüchtigen Speichers 5a oder in einen zusätzlichen speziellen Kostenstellenspeicher 16.

Ein anderes Beispiel für eine weiter ausgestatte Version soll nachfolgend erläutert werden. Der Header erfordert 1 Byte für die Befehlskennung BK, 2 Byte für die Versionsnummer NR, 1 Byte für die Zahl der "Regdef"-Beschreibungssätze RD und 2 Byte für die Länge LG der Information. Es können sich maximal 255 Registerdefinitionen ergeben. Somit können gemäß der oben aufgelisteten Minimalversion bereits 5 "Regdef"-Beschreibungssätze RD eine ausreichende Statistik liefern.

Für eine frei wählbare Statistikstruktur lassen sich eine beliebige Vielzahl an Parameter-Arten definieren, beispielsweise:

| Bezeichnung | Parameterart | | Bezeichnung | Parameterart |
|---|---|---|---|---|
| C | Carrier, | | G | Gewicht |
| D | Datum, | | K | Kostenstelle |
| P | Portowert, | | W | Wahldruck |
| ... | ... | | ... | ... |

Es lassen sich eine Vielzahl an zusätzlichen Parameterbeschreibungen definieren, bespielsweise um die Ober- und Untergrenzen einer Klasse (Postklasse, bzw. Portowertklasse oder Dienstleistungsklasse) oder um die Zugehörigkeit oder Nichtzugehörigkeit zu einer Klasse zu definieren. Zusätzlich werden die Verküpfungen innerhalb der Klassen festgelegt. Im Statistikmodus wird entsprechend die Zugehörigkeit zu jeder Klasse überprüft (Fig.12a, 12b). Parameterbeschreibungen sind beispielsweise:

| Bezeichnung | Beschreibung | | Bezeichnung | Beschreibung |
|---|---|---|---|---|
| $\leq$ | obere Grenze, | | $\neq$ | darf nicht erfüllt sein |
| $\geq$ | untere Grenze, | | $=$ | muß erfüllt sein |
| $\cap$ | Durchschnitt | | $\cup$ | Vereinigung |
| ... | ... | | ... | ... |

Beispiel:

| BK= 1 | NR= 0101 | RD= 5 | | LG= 139 | | | | | | | |
|---|---|---|---|---|---|---|---|---|---|---|---|
| 28 | 1 | C= | 2 | $\cap$ | C= | 2 | $\cap$ | Du | 980101 | $\cap$ Do | 981231 |
| 28 | 1 | P$\geq$ | 100 | $\cap$ | P$\leq$ | 999 | $\cap$ | W= | 25 | $\cap$ W$\neq$ | 40 |
| 28 | 1 | P$\geq$ | 1000 | $\cap$ | P$\leq$ | 5999 | $\cap$ | W= | 25 | $\cap$ W$\neq$ | 40 |
| 28 | 1 | P$\geq$ | 1 | $\cap$ | P$\leq$ | 5999 | $\cap$ | G$\geq$ | 1 | $\cap$ G$\leq$ | 20 |
| 21 | 1 | K$\geq$ | 1 | $\cap$ | K$\leq$ | 9 | $\cup$ | K$\geq$ | 8 | | |
| BCC | | | | | | | | | | | |

Im Header ergeben sich einschließlich einer BCC-Checksumme mit allen 5 "Regdef"-Beschreibungssätze RD (4 "Regdef"-Beschreibungssätzen zu je 28 Byte und ein "Regdef"-Beschreibungssatz zu 21 Byte) für die Länge LG der zu übermittelden Information (gezeigt in Fig.11) insgesamt:

$$LG = [(4 * 28) + 21 + BK + NR + RD + LG] \text{ Byte} = 139 \text{ Byte}. \qquad (2)$$

Nach der Beschreibung des Headers folgen im o.g. Beispiel die - in weiteren 5 Zeilen dargestellten - fünf "Regdef'-Beschreibungssätze RD, welche jeweils eine Statistikklasse definieren. Die Struktur aller "Regdef"-Beschreibungssätze ist ähnlich und deshalb spaltenweise erläuterbar.

Anhand des in der Figur 11 gezeigten Blockdiagramms der Statistikanweisungsdaten, welche zur Definition des Statistikmodus dienen, wird eine bei Datentransfer übermittelte Datenfolge verdeutlicht. Die Datenfolge beginnt mit einem Block 1101, der die Befehlskennung BK enthält, und weiteren Blöcken 1102, 1103, 1104 im Header zur Kennzeichnung und Einordnung der nachfolgenden Registerdefinitionen, was zur vorgenannten Tabelle bereits ausgeführt wurde. Diese nachfolgenden Registerdefinitionen haben eine gleiche Strucktur, welche mit einem Block 1110 zur Angabe der Regdef.-Länge beginnt. Dann folgen Blöcke 1111 für ein bng-Flag, 1112 für die Parameterart und -Beschreibung sowie 1113 für die Verknüpfung. Diese Blockfolge kann sich innerhalb einer Registerdefinition, gegebenenfalls mit anderer Parameterart und - Beschreibung sowie Verknüpfung, beliebig oft wiederholen. Den Abschluß dieser Statistikanweisungsdaten bildet optional ein Block 111 n für eine Prüfsumme, vorzugsweise BCC-Checksumme.

Im o.g. Beispiel sind 28 Byte pro Anweisungsdatensatz für die vier ersten Statistik-Klassen erforderlich und im jeweils ersten Block 1110 usw. bis 111n-10 (siehe Beispiel-Tabelle in der ersten Spalte) jedes "Regdef"-Beschreibungssatzes RD als "Regdef"-Länge genannt (außer ein kürzerer fünfter "Regdef"-Beschreibungssatz mit 21 Byte). Mit einem bng-Flag im jeweils zweiten Block 1111 usw. bis 111 n-9 (siehe Tabelle in der zweiten Spalte) jedes "Regdef"-Beschreibungssatzes, wird die Bedingung: "booking not given" verdeutlicht. Nur dann, wenn nicht woanders schon gebucht, wird eine Statistik für weitere Klassen weitergeführt. Das bng-Flag ist gesetzt, wenn eine Zahl 1 in der zweiten Spalte eingetragen ist. Im jeweils dritten Block (siehe obige Tabelle in der dritten Spalte) jedes "Regdef"-Datensatzes ist die Parameterart und eine zugehörige Beschreibung (Bedingungen, Grenzen, usw.) vermerkt. Die Bescheibungen in den dritten Blöcken 1112 usw. bis 111n-8 gelten im o.g. Beispiel (3.Spalten) für die folgenden Parameterarten: CIN, Währungseinheiten (beispielsweise in 1/100 EURO) und Kostenstellen-Nummer und den zugeordneten unteren Parametergrenzen. Dem Postbeförderer (Carrier) ist eine Carrier-Identifikations-Nummer (CIN), dem Postwert P sind Währungseinheiten und der Abteilung ist eine Kostenstellen-Nummer zugeordnet. In den jeweils vierten Blöcken 1113 usw. bis 111n-7 (siehe Beispiels in obiger Tabelle in der vierten Spalte) sind die unteren Parametergrenzwerte angegeben, mit gleich 2 für CIN, Währungseinheiten größer gleich 100, 1000 und 1 und Kostenstellen-Nummer größer gleich 1. Im jeweils fünften Block (siehe obige Tabelle in der fünften Spalte) besteht die Möglichkeit die logische Verknüpfung innerhalb einer Klasse zu definieren, welche zwischen zwei unterschiedlichen oder ähnlichen Parameterarten hergestellt werden soll.

Die oberen Parametergrenzen im sechsten Block 1115 usw. bis 111n-6 gelten im o.g. Beispiel (siehe Tabelle in der sechsten Spalte) für die folgenden Parameterarten: CIN, Währungseinheiten (beispielsweise in 1/100 EURO) und Kostenstellen-Nummer. Im siebenten Block 1116 usw. bis 111 n-5 (siehe obige Tabelle in der siebenten Spalte) sind die oberen Grenzwerte für o.g. Beispiel gleich 2 für CIN, Währungseinheiten kleiner gleich 999, 5999, 5999 und Kostenstellen-Nummer kleiner gleich 3. In den jeweils fünften, achten und elften Blöcken (Spalten) besteht die Wahl-Möglichkeit zur logischen Verknüpfung. Im achten Block (Spalte) des fünften "Regdef"-Beschreibungssatzes (d.h. fünfte Statistikklasse) steht im o.g. Beispiel eine Verknüpfung zur Bildung einer Vereinigungsmenge (Vereinigung), aber in den restlichen eine Verknüpfung zur Bildung einer Durchschnittsmenge (Durchschnitt). In den jeweils neunten, zehnten Blöcken (im vorliegenden Beispiel) bis zum dreizehnten Block (Spalte) wird im ersten "Regdef"-Beschreibungssatz ein Zeitfenster für die Datenerfassung definiert. Anders ausgedrückt:

Für die Definition der ersten Statistik-Klasse werden die Mengen der Parameterarten "Carrier" und "Datum" entsprechend der Verknüpfung zu einer Durchschnittsmenge kombiniert.
Für die Definition der zweiten und dritten Statistik-Klasse werden die Mengen der Parameterarten "Portowert" und "Wahldruck" entsprechend der Verknüpfung zu einer Durchschnittsmenge kombiniert.
Für die Definition der vierten Statistik-Klasse werden die Mengen der Parameterarten "Portowert" und "Gewicht" entsprechend der Verknüpfung zu einer Durchschnittsmenge kombiniert.
Für die Definition der fünften Statistik-Klasse werden die Mengen der Parameterarten "Kostenstellen-Nummer" entsprechend der Verknüpfung zu einer Durchschnitts-und Vereinigungsmenge kombiniert.

Im jeweiligen neunten bis zum dreizehnten Block (Spalte) wird im vorliegenden Beispiel für die zweite und dritte Klasse für jeweils eine bestimmte Menge von Portowerte eine Erfassung nach Wahldruckarten definiert sowie für die vierte Klasse eine Erfassung innerhalb von Gewichtsgrenzen definiert.

In der Figur 13b wird die Definition der zweiten Statistik-Klasse bildlich verdeutlicht. Der Portowert P = 100 fällt zwar noch in die Durchschnittsmenge der Menge P ≥ 100 mit der Menge P ≤ 999 (schräg karriertes Rechteck), aber nicht mehr in die Gesamtdurchschnittsmenge (schwarzes Rechteck) mit der Durchschnittmenge (karriertes Rechteck) der Menge aller Wahldrucke ausgenommen W=40 (W=40 ist der fehlende Kreissektor) mit der Menge des speziellen Wahldrucks W=25 (liniertes Rechteck). Ein solcher spezieller Wahldruck W=25 (liniertes Rechteck) kann beispielsweise "Luftpost" sein. Der ausgenommene Wahldruck W=40 kann ein Stempelaufdruck "mit Rückschein" sein, wie er für Briefe und für Päckchen üblich ist.

Prinzipiell beinhaltet jeder Datensatz "Regdef" eine Anzahl von Bedingungen, die per Statistikanweisungsdaten gemäß einer logischen Verknüpfung zu verbinden sind. Eine logische Verknüpfung Durchschnitt bezieht sich dabei auf Bedingungen, die zugleich mehrfach aber in unterschiedlicher Art- und Weise zutreffen müssen, damit die Frankierung im entsprechenden "Regdef"-Register gezählt wird.

Eine andere Vereinigung genannte logische Verknüpfung, bezieht sich dabei auf Bedingungen, Dienstleistungen oder Parameterarten von denen nur eine zutreffen muß, um in der Vereinigungsmenge gezählt zu werden. Eine Vereinigung liegt zum Beispiel vor, wenn eine für Mandanten (Kostenstellen 1 bis 3) vorgenommene Buchung zusammen mit einer anderen Buchung (Kostenstelle 7 des Frankiermaschinenbenutzers) statistisch erfaßt werden soll, weil hier erfahrungsgemäß immer ähnliche Dienstleistungen der Postbeförderer in Anspruch genommen werden.

Anhand der Figur 13a soll die Definition der fünften Statistik-Klasse im obigen Beispiel erläutert werden. Die Mengen der Parameterarten "Kostenstellen-Nummer" umfassen die Menge K ≥ 7 (weißes Rechteck) vereinigt mit der Durchschnittsmenge (schräg karriertes Rechteck) aus der Menge K ≥ 1 (schräge Schraffur von rechts oben nach links unten) mit der Menge K ≤ 3 (schräge Schraffur von links oben nach rechts unten). Die sich ergebende Durchschnitts- und Vereinigungsmenge wurde mit dickeren schwarzen Strichen umrandet.

Die innerhalb der verschiedenen Datensätze "Regdef" gegebene Definition bezieht sich in der Regel auf Daten, d.h. wenn nicht im Regdef selbst das Gegenteil angegeben wird, welche mittels einer Durchschnitt genannten Verknüpfung logisch zu verknüpfen sind. Das Gegenteil wird neben einer Vereinigung genannten Verknüpfung auch durch das gesetzte bng-Flag ("Eins" in 2.Spalte in obiger Tabelle) angegeben. Eine mehrfache Einbeziehung von Daten in die Statistik ist dann ausgeschlossen, d.h. die Daten werden nur einmal gezählt.

Ebenso kann eine Frankierung in mehreren Registern gezählt werden, wobei jedes Register ein bestimmtes Detail der Statistik in der vorgenannten Datenform speichert. Das wird durch das nicht gesetzte bng-Flag ("Null" in 2.Spalte in obiger Tabelle) zu Beginn jeder Registerdefinition gekennzeichnet. Beispielsweise kann eine Versendung als Drucksache mit dem Wert 1,00 EURO in folgenden Registern gezählt werden:

R400,0100,0999 für Frankierungen in der Postklasse 1,00 bis 9,99 EURO

R401,0001,5999 für Drucksachen in der Postklasse 0,01 bis 59,99 EURO.

R409,0101,1231 für beliebige Frankierungen im Zeitraum vom 1.1.98 bis 31.12.98.

Die Angabe kann statt in EURO auch in $ oder in einer anderen üblichen Währungseinheit erfolgen.

Ein jeder Datensatz Regdef. kennzeichnet einen beliebigen Datensatz mit beliebiger logischer Verknüpfung und enthält zumindest Bedingungen zur Länge, Restartigkeit, quantitative Bedingungen und qualitative Bedingungen, wie insbesondere spezielle Bedingungen zur Versendungsart, zur Dienstleistungsart und allgemeine Bedingungen zum Beförderer und ggf. zur Kostenstelle. Somit ergibt sich ein Datensatz:

**REGDEF**

a) **Länge** der Definition in Byte

b) **bng-Flag** Restartigkeit, bisher nicht gebucht-Flag, d.h. führe die Statistik nur weiter, wenn nicht schon irgendwo in anderen Registern der Parameterwert eingebucht wurde. Die Priorität ergibt sich aus der Reihenfolge der Buchungen. Wenn das Flag gesetzt ist, kann in diesem Register nur ein Eintrag erfolgen, wenn nicht schon irgendwo anders gebucht wurde. Damit sind "Sonstige Dienstleistungen mit Kennung xxxx" leicht implementierbar.

c) Parameterart: **Carrier C, Datum D, Portowert P, Gewicht G, Kostenstelle K, Wahldrucke u.a. Arten;** mit Parameter-Beschreibung: **untere Grenze ≥, obere Grenze ≤, muß erfüllt sein =, darf nicht erfüllt sein ≠, u.a. qualitative Bedingungen** (insbesondere für spezielle Bedingungen zur Versendungsart: Mit einem Byte werden die eigentlichen Bedingungen zur Versendungsart bzw. Wahldrucken definiert. Diese Bytes haben eine Vielzahl an Ausprägungen);

d) quantitative Bedingungen Wert- bzw. Betragsangabe;

e) logische Verknüpfungen von angrenzenden Parameterarten und deren Beschreibungen.

(ggf. weitere Statistikanweisungsarten in der selben Folge oder Wiederholung von c) und e) bis zum Ende des Regdef-Satz).

Die Definition der Versandparameter erfolgt vorab durch den Frankiermaschinenhersteller. Bevorzugt werden einheitliche, landspezifische Kennungen. Dabei ist nur wichtig, daß diese landspezifisch eindeutig sind. (z.B. Drucksache=1, Nachnahme=2, Maxibrief=3, AuslandA=4, Rabattierung typ1 = 79 usw....).

Das o.g. Beispiel setzt einen bestimmten öffentlichen Postbeförder voraus. Es kann aber auch erweitert werden auf andere öffentliche oder private Beförderer CIN. Die Datenzentrale überträgt diese Anweisungen zur Frankiermaschine. Gegebenenfalls kann auch die Nummer der Kostenstelle KST-Nr. als Kriterium mitübertragen werden, beispielsweise im Format Flags/Kst-min/Kst-max. Letzteres ist vom Ausstattungsgrad der jeweiligen Maschine mit einer entsprechenden Hard- und Software abhängig. Die Datenbank der Datenzentrale enthält die erforderlichen Angaben über die Möglichkeiten der Maschine. Somit kann eine Statistikanfrage eines Beförderers entsprechend bearbeitet werden, um auch noch weitere Bedingungen f) und g) zu programmieren, die dann zur Frankiermaschine übermittelt werden. Die Frankiermaschine wird dadurch in die Lage versetzt, eine vorbestimmte Frankierstatistik zu führen.

Beispielsweise im Kostenstellenspeicher 16 sind drei Speicherbereiche 16-01, 16-02, 16-03 vorgesehen. Einer der Speicherbereiche ist 16-01 und für unveränderbare Abrechnungsstrukturen vorgesehen. Hier erfolgt die Statistik wie bisher, in immer der gleichen Weise. Erfindungsgemäß ist ein weiterer Speicherbereich 16-02 für das Erfassen von Buchungsdaten gemäß der veränderbaren Statistikanweisungen vorgesehen. Hier erfolgt die Statistik so, wie das vom Postbeförderer verlangt wurde. Also eben nicht in immer der gleichen Weise, sondern on demand anders. Der Mikroprozessor ist programmiert, auf diese Speicherbereiche entsprechend zuzugreifen. Dabei führt er jedoch Anweisungen aus, die in einem dritten Speicherbereich 16-03 für die jeweilige veränderbare Abrechnungs- bzw. Statistikstruktur gespeichert vorliegen. Dabei handelt es sich um die von der Datenzentrale zur Frankiermaschine übermittelten Anweisungsdaten, mit welcher von der Datenzentrale die Statistikklassen frei definierbar sind und die im dritten Speicherbereich 16-03 für die jeweilige veränderbare Statistikanweisung nichtflüchtig gespeichert werden.

Natürlich können solche Speicherbereiche für veränderbare Abrechnungsstrukturen auch im nichtflüchtigen Speicher 5a bzw. 5b realisiert werden, welche ursprünglich nur für die Abrechnungsdaten vorgesehen waren und als Langzeitspeicher ausgebildet sind. Optional kann eine Prüfsumme an den Datensatz der statistischen Erfassung angehängt werden. Bei Absicherung mittels einer verschlüsselten Prüfsumme (MAC) stellt aber auch die Speicherung in einem beliebigen anderem Speichermedium kein Problem dar. Mittels der Frankiermaschine, deren Speicherbereich vorzugsweise nach dem Speicherbankprinzip erweitert wurde, kann somit eine Statistik geführt und somit eine Dienstleistung für einen ausgewählten Postbeförderer erbracht werden. Durch die vorangehend beschriebene Automatik ist diese Statistik immer objektiv. Eine MAC-Absicherung schützt die Daten vor subjektiven Einflüssen bzw. einer Manipulation. Eine derartig geschützte Statistik taugt auch zur nachträglichen Rekonstruktion von verlohren geglaubten Daten.

Es ist vorgesehen, daß eine Übertragung von Anweisungen von der Datenzentrale zur Frankiermaschine erfolgt und daß das Löschen von gespeicherten alten Statistikdaten nach einer Übertragung von neuen Statistikanweisungsdaten zum Bilden eines neuen Statistikmodus vom Mikroprozessor der Frankiermaschine durchgeführt wird. Insbesondere ist vorgesehen, daß das Löschen von gespeicherten alten Statistikanweisungsdaten nach einer Verifizierung von übertragenen neuen Statistikanweisungsdaten während bzw. im Ergebnis einer nichtflüchtigen Speicherung der neuen Statistikanweisungsdaten vom Mikroprozessor der Frankiermaschine durchgeführt wird. Beispielsweise erfolgt in einer vorausgehenden Transaktion die Übermittlung und Zwischenspeicherung von neuen Statistikanweisungsdaten und während einer folgenden weiteren Transaktion erfolgt das Löschen der Statistikdaten in einem ersten vorbestimmten Speicherbereich, wobei das Löschen in Zusammenhang mit der erfolgreich beendeten fehlerfreien vorausgehenden Transaktion mit Übertragung von neuen Statistikanweisungsdaten von der Datenzentrale zur Frankiermaschine durchgeführt wird.

Das Löschen nach einer Überprüfung der übertragenen Anweisungen zum Bilden eines neuen Statistikmodus wird ebenfalls wie das Löschen von alten Statistikdaten vom Mikroprozessor der Frankiermaschine durchgeführt. Die Überprüfung ist ggf. damit verbunden, mit einem Übertragen eines extern gespeicherten vorbestimmten Prüfsummen-Wertes in den internen OTP-RAM zur flüchtigen Speicherung und mit einem Bilden einer Prüfsumme im OTP-Prozessor über den Inhalt desjenigen externen Speichers, welchem die übertragenen Anweisungsdaten speichert, sowie mit einem Vergleich der im internen OTP-RAM flüchtig gespeicherten Prüfsumme mit der gebildeten Prüfsumme. Der Vergleich erfolgt mittels der internen Verarbeitungseinheit (OTP-CPU) gemäß Figur 1b im Kommunikationsmodus (300) bzw. (350).

Erfindungsgemäß erfolgt die Vorverdichtung von Daten für mindestens eine der Statistikklassen in der Frankiermaschine mittels einer logischen Verknüpfung von denjenigen Mengen, zu welchen die Daten zugehörig sind. Die Zugehörigkeit von Daten zu einer Stastikklasse wird mittels eines Überprüfungsschrittes ermittelt, wobei vom Mikroprozessor die in den übermittelten Statistikanweisungsdaten gegebenen Anweisungen für eine Registerdefinition interpretiert werden.

Abschließend wird anhand der Figur 12b erläutert, welche Abfolgen von Subschritten innerhalb eines Überprüfungsschrittes 422 (Figur 12a) ausgeführt werden. Ein erster Subschritt 4221 prüft, ob die übermittelte Statistikanweisung im Regdef2, zweiter Block, ein bng-Flag vorgegeben hat. Ist das nicht der Fall, wird der Subschritt 4223 erreicht und der Mikroprozessor 6 kann gemäß der im Speicherbereich 16-03 des Kostenstellenspeichers nichtflüchtig gespeicherten Statistikanweisung, im Regdef2, dritter Block, eine Vergleichsparameterart Y im Speicherbereich des Arbeitsspeichers 7 (RAM) auf die Parameterart P (Portowert) setzen. Außerdem werden die zugehörige Beschreibung und Grenzwerte aufgerufen und ebenso flüchtig im RAM gespeichert. Anderenfalls, wenn durch die Anweisung (zweiter Block) ein bng-Flag vorgegeben ist, wird der Subschritt 4222 erreicht, um ein ggf. vom Mikroprozessor 6 im Speicherbereich des Arbeitsspeichers 7 (RAM) gesetztes b-Flag zu detektieren. Ein gesetztes b-Flag signalisiert, daß eine Buchung schon einmal in der vorherigen Statistikklasse (im Schritt 421) erfolgt ist. In, einem solchen Fall wird zur nächsten Statistikklassenprüfung usw. durch alle restlichen Abfragen hindurch bis zum Ende des Statistikmodus verzweigt, um eine doppelte Buchung zu vermeiden.

Anderenfalls signalisiert ein nicht gesetztes b-Flag, das eine Aktualisierung (Hochzählung) der Register in einer der restlichen Statistikklassen erfolgen darf und der vorgenannte Subschritt 4223 wird erreicht, um Y zu setzen. Anschließend werden im Subschritt 4224 vom Mikroprozessor 6 alle in der Maschine für die jeweilige Dienstleistung (Frankieren) eingestellten Parameterarten mit der Parameterart Y verglichen. Bei Übereinstimmung mit der Parameterart Y wird in den nachfolgenden Abfrageschritten 4225 bis 422n anhand der zugehörigen Beschreibung und Grenzwerte ermittelt, ob eine die Einstellungen der Frankiermaschine in die Ermittlung einzubeziehen ist. Letzterer Fall wird in einem anschließenden Subschritt 422n+1 mittels einem gespeicherten Interpretationsprogramm interpretiert. Dann wird in Subschritt 422n+2 geprüft, ob laut Anweisung ein nächster Block der selben Klasse oder ein Block der nächsten Klasse abgearbeitet werden muß. Im letzteren Fall ist das Ende des Regdef-Datensatzes erreicht und es wird auf einen Schritt 423 verzweigt, um die Statistik für die zweite Statistikklasse zu aktualisieren (Stückzahl im zugehörigem Register inkrementieren) und um dann auf den nachsten Überprüfungsschritt 424 für die dritte Statistikklasse zu verzweigen. Anderenfalls, wenn das Ende noch nicht erreicht ist, wird vom Subschritt 422n+2 auf eine Subschritt 422n+3 verzweigt, um gemäß der Statistikanweisung die Verknüpfung und die nächste Anweisung betreff Parameterart und deren Beschreibung sowie Grenzwerte aufzurufen. Anschließen wird im Subschritt 422n+4 ermittelt, ob eine Verknüpfung mit einer anderen Parameterart angewiesen wurde. In einem solchen Fall wird auf den Subschritt 4223 zurückverzweigt. Anderenfalls, wenn die Vergleichsparameterart Y unverändert angewiesen wird, wird auf den Subschritt 4224 verzweigt. Wird nun im Subschritt 4224 ebenfalls ein eingestellter Parameter von der Art des Vergleichsparameters festgestellt, kann nach Durchlaufen mindestens einer der Subschritte 4225 bis 422n die Interpretation im Subschritt 422n+1 erfolgen, ob eine Zugehörigkeit zur Durchschnittsmenge vorliegt. Im obigen Beispiel gilt das für die Durchschnittsmenge $P \geq 100 \cap P \leq 999$. Bei festgestellter Zugehörigkeit zur Durchschnittsmenge wird im Subschritt 422n+2 abgefragt, ob das Ende der Registerdefinition erreicht ist und anderenfalls wieder auf den Subschritt 422n+3 verzweigt um weitere Verknüpfungen und Anweisungen, im obigen Beispiel für eine Gesamtdurchschnittsmenge, aufzurufen. Die Statistik für die zweite Statistiklasse kann nur aktualisiert werden, wenn die an der Frankiermaschine eingestellten vorbestimmten und definiert verknüpften Parameterwerte in diese Gesamtdurchschnittsmenge $P \geq 100 \cap P \leq 999 \cap W = 25 \cap W \neq 40$ fallen. Falls nur ein einziger der vorbestimmten und definiert zu verknüpfenden Parameterwerte an der Frankiermaschine nicht eingestellt wurde, wird dies im Subschritt 4224 festgestellt. Wenn beispielsweise der Wahldruck W = 40 (ein Stempelaufdruck "mit Rückschein") eingestellt wäre, dann wird wieder zum nächsten Überprüfungsschritt 424 verzweigt. Würde aber statt dessen ein Wahldruck W = 35 (Wertbrief) eingestellt, so trifft die Bedingung alles außer Stempelaufdruck "mit Rückschein" (Menge $W \neq 40$) zu und das Frankieren würde in der zweiten Statistikklasse gezählt werden, vorausgesetzt die anderen Bedingungen sind ebenfalls erfüllt (vergleiche bildliche Darstellung in Fig.13b).

## Patentansprüche

**1.** Verfahren zur Statistikmodusnachladung und statistischen Erfassung nach Statistikklassen bei der Speicherung eines Datensatzes in einer elektronischen Frankiermaschine, wobei ein Mikroprozessor in der Steuereinheit der Frankiermaschine programmiert ist, um in einen Kommunikationsmodus mit einer entfernten Datenzentrale einzutreten, zur Übertragung von statistisch erfaßten Daten an die Datenzentrale und zur Änderung von Parametern für die statistische Datenerfassung in der Frankiermaschine, **gekennzeichnet durch**

- Bilden von frei wählbaren neuen Statistikanweisungsdaten in der Datenzentrale für einen zukünftigen Statistikmodus, wobei die neuen Statistikanweisungsdaten wählbare Verknüpfungsanweisungen zur Klassenbildung umfassen, um eine Vorverdichtung der Daten zu ermöglichen sowie
- Kommunikation der Frankiermaschine mit einer Datenzentrale, um die im Statistikmodus erfaßten Daten an die Datenzentrale zu übertragen und um die neuen Statistikanweisungsdaten zum Bilden eines neuen Statistikmodus in der Frankiermaschine zu empfangen und zwischenzuspeichern,

- Übermittlung einer Information von der Frankiermaschine zur Datenzentrale in einer weiteren Transaktion, welche wobei die Information auf die zwischengespeicherten gültigen neuen Statistikanweisungsdaten bezogen ist,

- Prüfen der Information in der Datenzentrale und

- Übermittlung einer Anweisung an die Frankiermaschine, um die neuen Statistikanweisungsdaten in einem nichtflüchtigem Speicher der Frankiermaschine zu speichern und

- Erfassung von vorverdichteten Daten nach Statistikklassen in der Frankiermaschine, wobei alle Überprüfungsschritte auf Zugehörigkeit zu jeweiligen Statistikklassen durchlaufen werden und eine Interpretation entsprechend der Statistikanweisungsdaten, angewendet auf die zu erfassenden Daten, erfolgt.

2. Verfahren nach Anspruch 1, **gekennzeichnet dadurch, daß** ein Löschen von gespeicherten alten Statistikdaten nach einer Übertragung von neuen Statistikanweisungsdaten zum Bilden eines neuen Statistikmodus vom Mikroprozessor der Frankiermaschine durchgeführt wird.

3. Verfahren nach Anspruch 1, **gekennzeichnet dadurch, daß** das Löschen von gespeicherten alten Statistikanweisungsdaten nach einer Verifizierung von übertragenen neuen Statistikanweisungsdaten während bzw. im Ergebnis einer nichtflüchtigen Speicherung der neuen Statistikanweisungsdaten vom Mikroprozessor der Frankiermaschine durchgeführt wird.

4. Verfahren nach den Ansprüchen 1 bis 3, **dadurch gekennzeichnet, daß** die vorgenannte Statistikmodusnachladung der Frankiermaschine nach Zeitablauf automatisch erfolgt oder immer dann, wenn auf einen neuen Postbeförderer gewechselt wird, dessen Anweisungen noch nicht in der Frankiermaschine gespeichert worden waren.

5. Verfahren nach den Ansprüchen 1 bis 3, **dadurch gekennzeichnet, daß** nach einer vorausgehenden Transaktion mit Übermittlung, Verifizierung und Zwischenspeicherung von neuen Statistikanweisungsdaten in einer weiteren Transaktion die Versionsnummer NR der zwischengespeicherten gültigen neuen Statistikanweisungsdaten zur Datenzentrale übermittelt wird, nach deren Überprüfung auf Übereinstimmung mit einer vorbestimmten Versionsnummer in der Datenzentrale, letztere bei Übereinstimmung Anweisungen an die Frankiermaschine übermittelt, die neuen Statistikanweisungsdaten in einem nichtflüchtigen Speicher (5a, 5b, 16) zu speichern oder daß in der Frankiermaschine bei einem, im Ergebnis des Überprüfens auf Vorliegen einer erfolgreich beendeten Transaktion bzw. auf Fehlerfreiheit, festgestellten Fehler eine Fehlerroutine durchlaufen wird.

6. Verfahren nach den Ansprüchen 1 bis 3, **dadurch gekennzeichnet, daß** während der vorgenannten Kommunikation eine Übermittlung einer Information von der Frankiermaschine zur Datenzentrale und eine Prüfung der Information in der Datenzentrale erfolgt, wobei die Information auf die zwischengespeicherten gültigen neuen Statistikanweisungsdaten bezogen ist und wobei bei eindeutig festgestelltem Bezug der Information auf die zwischengespeicherten gültigen neuen Statistikanweisungsdaten die Datenzentrale Anweisungen an die Frankiermaschine übermittelt, die neuen Statistikanweisungsdaten in einem nichtflüchtigen Speicher (5a, 5b, 16) zu speichern oder daß bei fehlendem Bezug eine Fehlerroutine durchlaufen wird.

7. Verfahren nach den Ansprüchen 1 bis 3, **dadurch gekennzeichnet, daß** in einer vorausgehenden Transaktion die Übermittlung und Zwischenspeicherung von neuen Statistikanweisungsdaten erfolgt und daß während einer folgenden weiteren Transaktion das Löschen der Statistikdaten in einem ersten vorbestimmten Speicherbereich erfolgt, wobei das Löschen in Zusammenhang mit der erfolgreich beendeten fehlerfreien vorausgehenden Transaktion mit Übertragung von neuen Statistikanweisungsdaten von der Datenzentrale zur Frankiermaschine durchgeführt wird.

8. Verfahren nach Anspruch 1, **gekennzeichnet dadurch, daß** die Vorverdichtung von Daten für mindestens eine der Statistikklassen in der Frankiermaschine mittels einer logischen Verknüpfung von denjenigen Mengen erfolgt, zu welchen die Daten zugehörig sind und daß die Zugehörigkeit von Daten zu einer Statistikklasse mittels eines Überprüfungsschrittes ermittelt wird, wobei vom Mikroprozessor die in den übermittelten Statistikanweisungsdaten gegebenen Anweisungen für eine Registerdefinition interpretiert werden.

9. Verfahren nach Anspruch 3, **gekennzeichnet dadurch, daß** die Frankiermaschine einen Mikroprozessor zur Bildung einer Prüfsumme enthält und daß vom Mikroprozessor der Frankiermaschine das Löschen der alten Statistikanweisungsdaten nach einer Überprüfung der übertragenen neuen Statistikanweisungsdaten zum Bilden eines neuen Statistikmodus durchgeführt wird, wobei die Überprüfung folgende Schritte umfaßt:,

- flüchtige Zwischenspeicherung der übertragenen neuen Statistikanweisungsdaten und einem Bilden einer Prüfsumme über deren Inhalt,
- Übertragen eines gebildeten Prüfsummenwertes zur Datenzentrale während einer weiteren Transaktion und
- Vergleich des übermittelten Prüfsummenwertes mit einem vorbestimmten Prüfsummenwert für die übertragenen neuen Statistikanweisungsdaten in der Datenzentrale sowie
- Übermittlung des Ergebnisses des Vergleiches zur Frankiermaschine während der weiteren Transaktion im Kommunikationsmodus (300) bzw. (350) und Durchführung einer nichtflüchtigen Speicherung übertragenen neuen Statistikanweisungsdaten in einem Speicher (5a, 5b, 16) der Frankiermaschine bei in der Datenzentrale festgestellter Gleichheit.

10. Verfahren nach Anspruch 9, **gekennzeichnet dadurch, daß** in einem Schritt (918) die flüchtige Zwischenspeicherung der übertragenen neuen Statistikanweisungsdaten in Abhängigkeit von einer übermittelten PIN nur erfolgt, wenn im Schritt (915) von der Frankiermaschine eine verschlüsselte Nachricht empfangen wird, welche die neuen Statistikanweisungsdaten und die PIN der Frankiermaschine enthält, wenn dann von der Frankiermaschine die verschlüsselte Nachricht entschlüsselt und die PIN separiert und überprüft wird sowie wenn die PIN im Ergebnis als zutreffend bewertet wird.

11. Verfahren nach Anspruch 9, **gekennzeichnet dadurch, daß** der Mikroprozessor ein OTP-Typ ist, der in seinem internen Programmspeicher OTP-ROM den Algorithmus zur Bildung einer Prüfsumme und zu deren Verschlüsselung gespeichert enthält und

- daß das Bilden einer Prüfsumme im OTP-Prozessor über den Inhalt der übertragenen neuen Statistikanweisungsdaten, eine Verschlüsselung der Prüfsumme zu einer verschlüsselten Nachricht und eine flüchtige Zwischenspeicherung im internen Arbeitsspeichers OTP-RAM des vorgenannten OTP-Prozessors erfolgt, bevor die verschlüsselte Nachricht mit dem intern gebildeten Prüfsummenwert zur Datenzentrale im Schritt (1207) während einer weiteren Transaktion übertragen wird und
- daß die Datenzentrale die verschlüsselte Nachricht entschlüsselt und den Prüfsummenwert abtrennt und überprüft sowie daß bei in der Datenzentrale festgestellter Gleichheit mit einem vorbestimmten-Prüfsummenwert, nach Übermittlung des Vergleichsergebnisses zur Frankiermaschine im Schritt (1215) der weiteren Transaktion, die nichtflüchtige Speicherung der übertragenen neuen Statistikanweisungsdaten in einem Speicher (5a, 5b, 16) der Frankiermaschine vom vorgenannten OTP-Prozessors im Schritt (1218) durchgeführt wird.

**Claims**

1. A method for a statistics mode reloading and statistical recording by statistical classes in the storage of a data record in an electronic franking machine, wherein a microprocessor in the control unit of the franking machine is programmed to enter into a communication mode with a remote data central for transmitting recorded statistical data to the data central and for changing parameters for the statistical data collection in the franking machine, c h a r-acterized by

- forming of freely selectable new statistics instruction data at the data central for a future statistics mode, said new statistics instruction data comprising selectable linking instructions for the formation of classes in order to enable a pre-compression of the data;
- communication of the franking machine with a data central for transmitting the data recorded in the statistics mode to the data central and for receiving and temporarily storing the new statistics instruction data for the formation of a new statistics mode in the franking machine;
- transmission of an information from the franking machine to the data central in a further transaction, said information referring to the temporarily stored valid new statistics instruction data;
- verification of the information at the data central;
- transmission of an instruction to the franking machine to store the new statistics instruction data in a non-volatile memory of the franking machine; and
- recording of pre-compressed data by statistical classes in the franking machine, wherein all steps for verification of the affiliation with the respective statistical class are passed and an interpretation is made according to the statistics instruction data applied to the data to be recorded.

2. A method according to Claim 1, **characterized in that** stored old statistical data are deleted by the microprocessor of the franking machine after a transmission of new statistics instruction data for forming a new statistics mode.

3. A method according to Claim 1, **characterized in that** stored old statistics instruction data are deleted by the microprocessor of the franking machine after a verification of transmitted new statistics instruction data or as a result of a non-volatile storage of the new statistics instruction data.

4. A method according to Claims 1 to 3, **characterized in that** the above-mentioned statistics mode reloading of the franking machine is effected automatically upon expiry of a certain period or upon every change to a new postal carrier whose instructions have not been stored in the franking machine yet.

5. A method according to Claims 1 to 3, **characterized in that**, after a preceding transaction with a transmission, verification and temporary storage of new statistics instruction data, the version number NR of the temporarily stored new statistics instruction data is transmitted to the data central in a further transaction, after the verification of which for correspondence to a pre-defined version number at the data central, the latter, upon correspondence, transmits instructions to the franking machine to store the new statistics instruction data in a non-volatile memory (5a, 5b, 16); or that, in the franking machine if an error is detected as a result of the verification for a successfully completed transaction or as to correctness, an error routine is executed.

6. A method according to Claims 1 to 3, **characterized in that**, during the above mentioned communication, information is transmitted from the franking machine to the data central and the information is checked at the data central, wherein said information refers to the temporarily stored valid new statistics instruction data and wherein, in case of a clearly detected reference of the information to the temporarily stored valid new statistics instruction data, the data central transmits instructions to the franking machine to store the new statistics instruction data in a non-volatile memory (5a, 5b, 16); or that, in case of a lack of reference, an error routine is executed.

7. A method according to Claims 1 to 3, **characterized in that** that new statistics instruction data are transmitted and temporarily stored in a preceding transaction and that the statistical data in a first pre-defined memory area are deleted during a subsequent further transaction, wherein the deletion is carried out in connection with the successfully completed preceding error-free transaction with a transmission of new statistics instruction data from the data central to the franking machine.

8. A method according to Claim 1, **characterized in that** the pre-compression of data for at least one of the statistical classes is done in the franking machine by means of a logic linking of those quantities that the data are affiliated with and that the affiliation of data with a statistical class is determined by means of a verification step, wherein the microprocessor interprets the instructions for a register definition given in the transmitted statistics instruction data.

9. A method according to Claim 3, **characterized in that** the franking machine contains a microprocessor for forming a checksum and that the microprocessor of the franking machine deletes the old statistics instruction data after verifying the transmitted new statistics instruction data for forming a new statistics mode, wherein said verification comprises the following steps:

   - volatile intermediate storage of the transmitted new statistics instruction data and forming of a checksum about their content;
   - transmission of the formed checksum value to the data central in a further transaction;
   - comparison of the transmitted checksum value with a pre-defined checksum value for the transmitted new statistics instruction data at the data central; as well as
   - transmission of the result of the comparison to the franking machine during the further transaction in the communication mode (300) or (350) and non-volatile storage of the transmitted statistics instruction data in a memory (5a, 5b, 16) of the franking machine if correspondence was confirmed at the data central.

10. A method according to Claim 9, **characterized in that,** in a step (918), the volatile temporary storage of the transmitted new statistics instruction data will only take place depending on a transmitted PIN if, in a step (915), the franking machine receives an encoded message containing the new statistics instruction data and the PIN of the franking machine, if the franking machine then decodes the encoded message and separates the PIN and if, as a result, the PIN is interpreted as appropriate.

11. A method according to Claim 9, **characterized in that** the microprocessor is of an OTP type that contains the algorithm for forming a checksum and for encoding it stored in its internal program memory OTP-ROM; and

   - that, in the OTP processor, a checksum about the content of the transmitted new statistics instruction data is formed, said checksum is encoded into an encoded message and is temporarily stored in the volatile internal random-access memory OTP-RAM of said OTP processor, before the encoded message with the internally formed checksum value is transmitted to the data central in step (1207) during a further transaction; and
- that the data central decodes the encoded message and separates and verifies the checksum value and that, in case correspondence to a pre-defined checksum value is detected at the data central, after transmission of the result of the comparison to the franking machine in step (1215) of the further transaction, the transmitted new statistics instruction data are stored in a non-volatile manner in a memory (5a, 5b, 16) of the franking machine by said OTP processor in step (1218).

**Revendications**

1. Procédé pour le rechargement de mode statistique et d'une saisie statistique, selon des classes de statistiques, lors de la mémorisation d'un enregistrement logique dans une machine à affranchir le courrier électronique, tandis qu'un microprocesseur est programmé dans l'unité de liaison de l'affranchisseuse, afin d'entrer dans un mode de communication avec une centrale de données à distance. Procédé également pour le transfert de données saisies par statistique à la centrale de données et pour le changement de paramètres en vue de la saisie statistique des données dans la machine à affranchir le courrier, **caractérisé par**

   - l'établissement de nouvelles données d'instruction statistiques, pouvant être sélectionnées directement, dans la centrale de données pour un mode statistique futur, tandis que les nouvelles données d'instruction statistiques comprennent des instructions de connexion, pouvant être sélectionnées, pour établir des classes, afin de permettre une précondensation des données, ainsi que par
   - la communication de l'affranchisseuse avec une centrale de données, afin de transmettre les données saisies dans le mode statistique à la centrale de données et, afin de réceptionner et de buffériser les nouvelles données d'instrction statistiques pour l'établissement d'un nouveau mode statistique dans la machine à affranchir le courrier,
   - la diffusion d'une information de l'affranchisseuse à la centrale de données dans une autre transaction, tandis que l'information est basé sur les nouvelles données valides d'instruction statistiques en mémoire intermédiaire,
   - le contrôle de l'information dans la centrale de données et,
   - la diffusion d'une instruction à l'affranchisseuse, afin de stocker les nouvelles données d'instruction statistiques dans une mémoire non volatile de la machine à affranchir le courrier et,
   - la saisie des données précondensées, selon des classes statistiques, dans l'affranchisseuse, tandis que tous les pas de vérification d'appartenance aux classes statistiques du moment sont exécutés et une interprétation, appliquée sur les données saisies, s'effectue selon les données d'instruction statistiques.

2. Procédé, selon la spécification 1, **caractérisé en ce que**, les anciennes données statistiques stockées sont effacées après un transfert de nouvelles données d'instruction statistiques pour l'établissement d'un nouveau mode statistique du microprocesseur de la machine à affranchir le courrier.

3. Procédé, selon la spécification 1, **caractérisé en ce que**, l'effacement des anciennes données d'instruction statistiques stockées est réalisé après une vérification faite des nouvelles données d'instruction statistiques transmises, durant ou selon le cas en résultat d'une mémorisation non volatile des nouvelles données d'instruction statistiques du microprocesseur de la machine à affranchir le courrier.

4. Procédé, selon les spécifications de 1 à 3, **caractérisé en ce que**, le rechargement de mode statistique susmentionné de l'affranchisseuse a lieu automatiquement après un laps de temps ou toujours dans le cas où, il est passé sur un nouveau transporteur postal, dont les instructions n'avaient pas encore été enregistrées dans l'affranchisseuse.

5. Procédé, selon les spécifications de 1 à 3, **caractérisé en ce que**, après une transaction précédente avec communication, vérification et bufférisation de nouvelles données d'instruction statistiques dans une autre transaction, un numéro de version NR des nouvelles données d'instruction statistiques valides en mémoire intermédiaire est transmis à la centrale de données, après sa vérification quant à la compatibilité avec un numéro de version prédéterminé dans la centrale de données, cette dernière transmet en cas de compatibilité des instructions à la machine à affranchir le courrier pour stocker les nouvelles données d'instruction statistiques dans une mémoire non volatile (5a, 5b, 16) ou, **en ce qu'**une procédure erreur est exécutée dans l'affranchisseuse en cas d'une erreur constatée, dans le résultat de la vérification faite sur la présence d'une transaction bien terminée ou selon le cas sur l'absence d'erreurs.

**6.** Procédé, selon les spécifications de 1 à 3, **caractérisé en ce que**, durant la communication susmentionnée, une transmission d'une information de l'affranchisseuse à la centrale de données et, un contrôle de l'information s'effectuent dans la centrale de données, tandis que l'information est basée sur les nouvelles données d'instruction statistiques valides en mémoire intermédiaire et, tandis que la centrale de données transmet des instructions à la machine à affranchir le courrier, lors d'un rapport clairement constaté de l'information aux nouvelles données d'instruction statistiques valides en mémoire intermédiaire, afin de stocker les nouvelles données d'instruction statistiques dans une mémoire non volatile (5a, 5b, 16) ou, **en ce qu'**une procédure erreur est exécutée si aucun rapport n'est trouvé.

**7.** Procédé, selon les spécifications de 1 à 3, **caractérisé en ce que**, la communication et la bufférisation de nouvelles données d'instruction statistiques s'effectuent dans une transaction précédente et **en ce que**, l'effacement des données statistiques a lieu durant une autre transaction suivante, dans une première zone de mémoire prédéterminée, tandis que l'effacement est effectué en relation avec une transaction précédente bien terminée sans erreurs avec transmission des nouvelles données d'instruction statistiques de la centrale de données à la machine à affranchir le courrier.

**8.** Procédé, selon la spécification 1, **caractérisé en ce que**, la précondensation de données a lieu pour au moins une des classes statistiques dans l'affranchisseuse grâce à une intersection de ces quantités, dont les données en font partie et, **en ce que**, l'appartenance de données est déterminée à une classe statistique au moyen d'un pas de vérification, tandis que les instructions transmises dans les données d'instruction statistiques communiquées sont interprétées par le microprocesseur pour une définition de registre.

**9.** Procédé, selon la spécification 3, **caractérisé en ce que**, la machine à affranchir le courrier comprend un microprocesseur pour établir une somme de contrôle et, **en ce que**, l'effacement des anciennes données d'instruction statistiques est effectué par le microprocesseur de l'affranchisseuse, après vérification des nouvelles données d'instruction statistiques transmises, pour l'établissement d'un nouveau mode statistique, tandis que la vérification englobe les pas suivants :

  - la bufférisation volatile des nouvelles données d'instruction statistiques transmises et un établissement d'une somme de contrôle via son contenu,
  - le transfert d'une valeur établie des sommes de contrôle à la centrale de données durant une autre transaction et
  - la comparaison de la valeur communiquée des sommes de contrôle avec une valeur prédéterminée des sommes de contrôle pour les nouvelles données d'instruction statistiques transférées dans la centrale de données ainsi que
  - la communication du résultat de la comparaison à la machine à affranchir le courrier durant la seconde transaction dans le mode de communication (300) ou selon le cas (350) et, exécution d'une mémorisation non volatile de nouvelles données d'instruction statistiques transférées dans une mémoire (5a, 5b, 16) de l'affranchisseuse en cas d'égalité constatée dans la centrale de données.

**10.** Procédé, selon la spécification 9, **caractérisé en ce que**, la bufférisation volatile des nouvelles données d'instruction statistiques transférées a lieu dans un pas (918) en fonction d'un PIN transmis seulement, lorsqu'au pas (915) de l'affranchisseuse, un message chiffré est reçu, lequel contient les nouvelles données d'instruction statistiques et le PIN de la machine à affranchir le courrier, lorsqu'ensuite le message chiffré de l'affranchisseuse est déchiffré et le PIN séparé et vérifié ainsi que, lorsque le PIN est estimé exact dans le résultat.

**11.** Procédé, selon la spécification 9, **caractérisé en ce que**, le microprocesseur est de type OTP, qui dans sa mémoire de programme interne OTP-ROM, comprend l'algorithme mémorisé pour établir une somme de contrôle et sa codification et, **en ce que**, l'établissement d'une somme de contrôle dans le processeur OTP effectue, par le contenu des nouvelles données d'instruction statistiques transférées, une codification de la somme de contrôle à un message chiffré et une bufférisation volatile dans une mémoire centrale interne OTP-RAM du processeur OTP susmentionné, avant que le message chiffré ne soit transmis à la centrale de données avec une valeur des sommes de contrôle établie à l'interieur au pas (1207), durant une seconde transaction et, **en ce que**, la centrale de données déchiffre le message chiffré et sépare et vérifie la valeur des sommes de contrôle ainsi que, la mémorisation non volatile des nouvelles données d'instruction statistiques, transférées dans une mémoire (5a, 5b, 16) de la machine à affranchir le courrier, est effectué par le processeur OTP susmentionné au pas (1218), lorsqu'une égalité a été constatée dans la centrale de données avec une valeur prédéterminées des sommes de contrôle, après communication des résultats de comparaison au pas (1215) pour l'affranchisseuse.

EP 0 892 368 B1

**Fig. 1a**

**Fig. 1b**

29

Fig. 2

**300**

ⓔ **310**

Zustandsanzeige

**301**

n ← Transaktions-ersuchen ? → j

ⓑ zum Betriebsmodus für weitere Abfragen

**302** — Anzeige von VG-wunsch und VG-Status, automatische MODEM-Typ-Erkennung, Eingabe/Anzeige-Routine, ggf. Werteingabe u.a. Änderungen (X- oder R- oder C-Taste u.a.Tasten), Transaktionenzähler T =: 0 setzen, Parameter und maximale Anzahl an Transaktionen (Tmax) eingeben, MODEM initialisieren.

**303** PIN u.a.Parameter fehlerfrei ? — n

j

**304** Wählen und Verbindungs-aufbau zur Datenzentrale

n ← **370** n-te Wahl-wiederholung ? → j

**305** Verbindungs-aufbau o.k. ? — n

j

**306** T < Tmax ? — n

j

**361** Fehlerroutine

**362** Transaktionersuchen (E-Flag) zurücksetzen

**380**

ⓦ

ⓡ Transaktion durch-führen und über-prüfen, Nachladung gemäß Vorgabewert und Daten ändern, Transaktionszähler inkrementieren.

ⓠ

Fig. 3

**Kommunikationsmodus I**

302 — PIN und Parameter eingeben,
Transaktionenzähler T = 0 setzen,
Modem intialisieren,

(w) (r)

304

wählen

303 — PIN u.a.Parameter fehlerfrei ?   j   n

361 — Fehler-routine

305   n   370   n

j

306

T < Tmax ?

j

n

362

Transaktionenzähler T inkrementieren — 381

382   T = 1 ?   j   n   383

j   T = 2 ?   n   384   n   387

385   386   T = 3 ?   n

2.Transaktion   3.Transaktion   4.Transaktion

**Datenzentrale**

DZ

(504) ← PIN u.a. — (307)
(506) — o.k. → (309)
(508) ← cv — (313)
(511) — Cv+1 → (315)

(318)

388 — 1.Transaktion:
PIN, Transaktionstyp u.a. Daten,
Protokoll-Nr., Registerdaten
und KST-Nummer an DZ senden,
OK-Meldung von DZ empfangen
Beginnmeldung an DZ senden,
VG-Wert, Kundenkontodaten
empfangen,
Daten speichern u. auswerten,

(r) ← 389 — Unterbrechung ?
j

n

390 — Datei fehlerfrei ?   n

380

j

(w)

(q)

Fig. 4

**380**

**1.Transaktion; Schritte 381 - 388**

**383**     T = 2 ?    **j**    **n**

**361**

**q**

**Fehlerroutine**

**310**

**Zustandsanzeige**

**e**

**DZ**

**385**

PIN u.a.

(704)   (607)
(706)   o.k.   (608)
(708)   cv+2   (613)
(711)   Cv+3   (615)

(618)

**2.Transaktion**
PIN, Transaktionstyp u.a.Daten
Seriennummer an DZ senden,
OK-Meldung von DZ empfangen
Beginnmeldung an DZ senden,
Transaktionsdaten empfangen:
Bestätigung des VG-Wertes,
Daten speichern u. auswerten

**384**     T = 3 ?    **j**    **n**

**386**

PIN u.a.

(1004)   (907)
(1006)   o.k.   (908)
(1008)   cv+4   (913)
(1011)   Cv+5   (915)

(918)

**3.Transaktion**
PIN, Transaktionstyp u.a.Daten
Versionsnummer an DZ senden,
OK-Meldung von DZ empfangen
Beginnmeldung an DZ senden,
Transaktionsdaten empfangen:
neue Statistikanweisungsdaten
verifizieren&zwischenspeichern

**b**

**211**     Daten übermittelt ?    **n**

**213**   **j**

Statistikanweisungs & Fehlerauswertungs -
Modus,

**387**

PIN u.a.

(1304)   (1207)
(1306)   o.k.   (1208)
(1308)   cv+6   (1213)
(1311)   Cv+7   (1215)

(1218)

**4.Transaktion**
alte Statistik löschen
PIN, Transaktionstyp u.a.Daten
Versionsnummer an DZ senden,
OK-Meldung von DZ empfangen
Beginnmeldung an DZ senden,
Transaktionsdaten empfangen:
Statistikanweisungsdaten
nichtflüchtig speichern.

**215**

**Anzeigemodus**

**s**     **d**

**389**    **n**   Unterbrechung ?    **j**

**390**   fehlerfrei ?   **j**    **n**    **q**

**b** — — **w**

**r**

## Fig. 5

209-20

Schleifenzähler
rücksetzen

209-1, 209-2

Eingabe-und Anzeige-Subroutine

209-3
Datum
geändert ? — ja → 

209-4
Wechsel auf vordatiertes
Datum oder aktuelles Datum

nein

209-5
Portowert
geändert ? — ja →

209-6
MAC- generieren über Grafik
des geänderten Portowertes

nein

209-7
anderes
Klischee gewählt ? — ja → n

209-8
in FM
verfügbar ? — ja →

209-16
Datenprüfung
mit MAC

nein

209-9
anderer
Carrier gewählt ? — ja → n

209-10
in FM
verfügbar ? — ja →

209-17
Datenprüfung
mit MAC

nein

209-11
anderer
Wahldruck gewählt ? — ja → n

209-12
in FM
verfügbar ? — ja →

209-18
Datenprüfung
mit MAC

nein

209-13
Carrierneueingabe
gewählt ? — ja → k

209-19
Anforderungsdaten
bilden — l

nein

209-21
Portowert > R1 ? — ja →

209-22
Anzeige: "NO LIMIT"

nein

209-23
Portowert > R1 der
KST ? — ja →

209-24
Anzeige: "NO LIMIT"

nein

n        i

Fig. 6

Fig. 7

h''

i

**209-40**

Modusauf KST-Namen-
Änderungsmodus
geändert ?

ja

**209-41**

zugeordnete Namen zur eingestellten Kostenstellen-Nummer
anzeigen und Umschaltung zur
Eingabe des neuen Namens

nein

**209-42**

auf
Carrier-Namen-
Änderungsmodus
geändert ?

ja

**209-43**

zugeordnete Namen zur eingestellten Carrier-Nr. anzeigen
und neuen Namen eingeben

nein

**209-44**

Darstellung aller
Verbrauchssummen
zur einer KST-
Nr. ?

ja

**209-45**

Anzeigen der eingestellten KST-
Nummer und Carrier- bezogene
Auflistung der Registerwerte
Umschaltung zum Anzeigemodus

nein

**209-46**

Darstellung aller
Stückzahlen zu einer
KST-Nr. ?

ja

**209-47**

Anzeigen der eingestellten KST-
Nummer und Carrier- bezogene
Auflistung der Registerwerte
Umschaltung zum Anzeigemodus

nein

**209-48**

Darstellung aller
Verbrauchssummen
zur Carrier-
Nr. ?

ja

**209-49**

Anzeigen der eingestellten
Carrier-Nr. und KST- bezogene
Auflistung der Registerwerte
Umschaltung zum Anzeigemodus

nein

**209-50**

Darstellung aller
Stückzahlen zu einer
Carrier-Nr. ?

ja

**209-51**

Anzeigen der eingestellten
Carrier-Nr. und KST- bezogene
Auflistung der Registerwerte
Umschaltung zum Anzeigemodus

nein

e

Fig. 8

**350**

**3510**

Ⓖ

Zustandsanzeige

**3501**

n — Transaktions-ersuchen ? — j

Ⓜ zum
Betriebsmodus
für weitere Abfragen

**3502** — Transaktionenzähler T =: 2 setzen,
Anzeige von Automatik-Status,
automatische MODEM-Typ-Erkennung,
automatische Eingabe/Anzeige-Routine für
Parameter und maximale Anzahl an Transaktionen
(Tmax) eingeben, MODEM initialisieren.

**3503** — PIN
u.a.Parameter
fehlerfrei ? — n

j

**3504** — Wählen und
Verbindungsaufbau zur
Datenzentrale

**3570** — n-te Wahlwiederholung ? — j

n

**3505** — Verbindungsaufbau o.k. ? — n

j

**3561** — Fehlerroutine

**3506** — T < Tmax ? — n

j

**3562** — Transaktionersuchen
(E-Flag) zurücksetzen

Ⓦ

**3580**

Ⓠ

Ⓡ Transaktion durch-
führen und überprüfen, Nachladung
(gemäß Figur 10)
und Daten ändern,
Transaktionszähler
inkrementieren.

Fig. 9

**3580**

**DZ**

inkrementiere Transaktionenzähler T

**3581**

**3582** T = 1 ? **n**

j

**3588** 1.Transaktion

**3583** T = 2 ? **n**

j

**3585** 2.Transaktion

**3584** T = 3 ? **n**

j

**3586**
3.Transaktion
PIN, Transaktionstyp u.a.Daten
Protokoll-&Versions-Nr. senden,
OK-Meldung von DZ empfangen
Beginnmeldung an DZ senden,
Transaktionsdaten empfangen:
neue Statistikanweisungsdaten
verifizieren&zwischenspeichern

PIN u.a.
(1004) (907)
o.k. (1006) (908)
cv+4 (1008) (913)
Cv+5 (1011) (915)
(918)

**3587**
4.Transaktion
alte Statistik löschen
PIN, Transaktionstyp u.a.Daten
Versionsnummer an DZ senden,
OK-Meldung von DZ empfangen
Beginnmeldung an DZ senden,
Transaktionsdaten empfangen:
Statistikanweisungsdaten
nichtflüchtig speichern.

PIN u.a.
(1304) (1207)
o.k. (1306) (1208)
cv+6 (1308) (1213)
Cv+7 (1311) (1215)
(1218)

**3589** n Unterbrechung ? j

**3590** fehlerfrei ? n

b w j q r

**q**

**3561** Fehlerroutine

**3510** Zustandsanzeige

**e**

**b**

**211** Daten übermittelt ? **n**

j

**213**
Statistikanwei-
sungs-& Fehlerauswertungs -
Modus,

**215** Anzeigemodus

s d

Fig. 10

Fig. 11

Fig.13a

Fig. 13b

**Statistikmodus (416 - 430)**

total abrechnen: R1,..., usw. bis Rz — 406

416

MAC-Bildung und unter selektierter KST-Nr. befördererspezifisch speichern

420 — zu Kl. 1 ?  n

422 — zu Kl. 2 ?  n

424 — zu Kl. 3 ?  n

426 — zu Kl. 8 ?  n

421 — Statistik f. Kl. 1 aktualisieren & b-Flag setzen

423 — Statistik f. Kl. 2 aktualisieren & b-Flag setzen

425 — Statistik f. Kl. 3 aktualisieren & b-Flag setzen

427 — Statistik f. Kl. 8 aktualisieren & b-Flag setzen

kumulative MAC-Bildung über alle Klassen (optional)

430

431 — Frankierdruckroutine

## Fig. 12a

420 — zur Kl. 1 ?  n  j

Schritt 422 zur Kl. 2

4221 — bng-Flag ?  n  j

4222 — b-Flag ?  n  j

4223 — setze Y nach Anweisung

von der 1.Statistik-klassenprüfung

zur 3. Statistik-klassen-Prüfung

4224 — ein-gestellte Parameterart = Y  n  j

4225 — ≤ ?  n  j

422n — ≥ ?

422n+1 — Interpretation & Größeneingabe

422n+2 — Ende ?  j  n

422n+3 — Verknüpfung & nächste An-weisung rufen

422n+4 — Verknüpfung mit einer anderen Parameterart ?  j  n

421 — Statistik f. Kl. 1 aktualisieren & b-Flag setzen

423 — Statistik für Kl. 2 aktualisieren & b-Flag setzen

## Fig. 12b